# EUROPEAN PATENT APPLICATION

(11) **EP 1 403 796 A1**
(43) Date of publication of application: **31.03.2004**
(21) Application number: 02741270.9
(22) Date of filing: 24.06.2002
(51) Int. Cl.: G06F 17/60, G09B 5/14, G09B 19/00

(54) **EDUCATION SERVICE SYSTEM USING COMMUNICATE LINE AND EDUCATION SERVICE PROVIDING METHOD**

(30) Priority: 25.06.2001 JP 2001192063
(71) Applicant: Nova Co., Ltd., Osaka-shi, Osaka 542-0086 (JP)
(72) Inventor: SARUHASHI, Nozomu, c/o NOVA CO., LTD, Osaka-shi, Osaka 542-0086 (JP); UEMURA, Masahide, c/o NOVA CO., LTD, Osaka-shi, Osaka 542-0086 (JP); SHIMAMOTO, Katsunori, c/o NOVA CO., Ltd, Osaka-shi, Osaka 542-0086 (JP); YASUMI, Yu,c/o NOVA CO., LTD, Osaka-shi, Osaka 542-0086 (JP)
(74) Representative: Zinkler, Franz, Dipl.-Ing.
(86) International application number: PCT/JP2002/006299
(87) International publication number: WO 2003/007208

(57) **Abstract**

An educational service using communication lines is provided, in which multimedia educational materials stored in advance, including video images, are delivered online so that a conversation based on the educational materials can be held with an instructor for great educative results. The service includes: a bidirectional communication server (10) for conducting bidirectional multimedia communication; a contents management server (20) for storing multimedia contents; a contents delivery server (12) for delivering the contents stored in the contents management server to user terminals; and administration system (50-56), thus providing face-to-face services and automatic services in combination. The educational service also has the function of conducting lesson evaluations and level check tests automatically. The educational service is also provided with kartes of the members' lesson histories, and has the function of creating personal training point reports and educational plans automatically and the function of extracting additional instruction targets automatically.

## Description

### TECHNICAL FIELD

The invention relates to an educational service system and an educational service providing method using communication lines. In particular, the invention relates to an educational service system and an educational service providing method for use in educational services, for example, for providing English conversation and other language educations at remote sites over the Internet (hereinafter, referred to as "Internet study abroad services").

### BACKGROUND ART

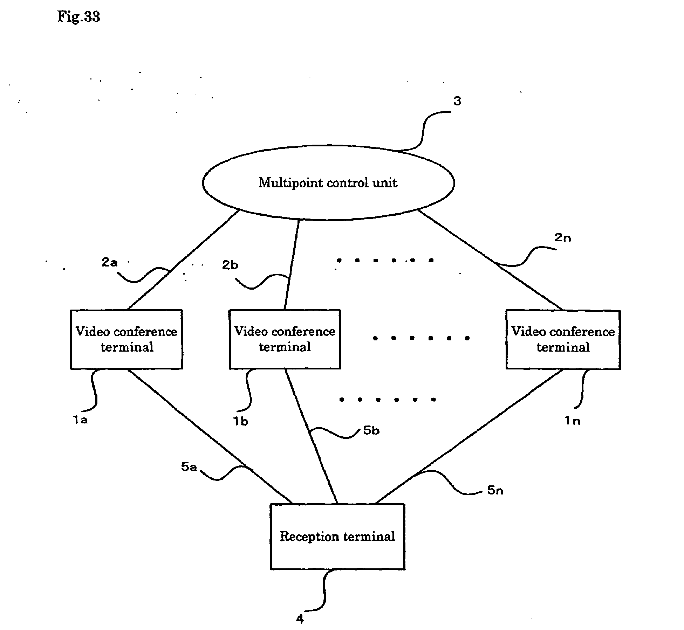

Among conventional educational service systems using communication lines is a video conference system as shown in Fig. 33. In the diagram: the reference numerals 1a, 1b, ..., 1n represent video conference terminals; 2a, 2b, ..., 2n, and 5a, 5b, ..., 5n communication lines; 3 a multipoint control unit for multipoint communications, which connects the plurality of video conference terminals over the communication lines; and 4 a reception terminal for conference reception. Each of the video conference terminals comprises a display for displaying images, a TV camera for capturing images, a headphone set including a microphone for capturing voice and earphones for hearing, and a personal computer with a built-in TA (terminal adaptor). The video conference terminals are connected with the multipoint control unit 3 and the reception terminal 4 over the communication lines. ISDN telephone lines are typically used as the communication lines in view of receiving services at home and conducting image communications.

For educational services using this video conference system, students first call the center where the reception terminal is, and place their orders for the services. If the reception terminal confirms that the callers are predetermined students, it connects the corresponding video conference terminals with the multipoint control unit. Instructors also use video conference terminals and connect the same to the multipoint control unit. Consequently, the individual students can make bidirectional communications using TV pictures and sounds with the instructors, receiving English conversation and other educational services. In order to handle situations with three or more attendants in a video conference, the multipoint control unit has the function of synthesizing the images of the connected video conference terminals for split display. This allows each single instructor to provide educational services for a plurality of students.

In English conversation classes using such a video conference system, the use of the video conference system with the bidirectional communication function using TV pictures and sounds eliminates the need for the students to go to the English conversation school. This makes the education in English conversation available at home to such students as those who live away from the school, who have no time to attend school, and who have difficulties in leaving home on account of having small children or parents in need of nursing care. This also allows more flexible scheduling of lessons, facilitating small-group education by native speakers which has been proved to provide great educative results.

In the educational system using such a conventional video conference system, however, it is face-to-face conversation services that are provided mainly. It has thus been impossible to apply the educational system to more sophisticated education such that multimedia educational materials stored in advance, including various types of video images, are delivered and used online.

It is thus a principle object of the present invention to provide an educational service using communication lines in which multimedia educational materials stored in advance, including various types of video images, are delivered online so that a conversation based on the educational materials can be held with an instructor with great educative results.

### DISCLOSURE OF THE INVENTION

The educational service system using communication lines according to claim 1 comprises: bidirectional communication means for conducting bidirectional communication between user terminals, using multimedia information including at least TV pictures and sounds; contents management means for storing multimedia contents to be used as educational materials; and contents delivery means for delivering the contents stored in the contents management means to the user terminals.

The educational service providing method using communication lines according to claim 2 is a method of providing an educational service by employing the educational service system using communication lines according to claim 1, comprising the steps of: receiving TV pictures and sounds transmitted from the user terminals; synthesizing the TV pictures and sounds received; transmitting the synthesized TV pictures and sounds to the user terminals; storing multimedia contents to be used as educational materials; fetching the stored contents; and delivering the fetched contents to the user terminals.

The educational service providing method using communication lines according to claim 3 is one according to claim 2, wherein: the step of storing contents includes the steps of storing materials of the contents to be delivered, or material contents, and storing a scenario defining a combination of the material contents along a time axis; and the step of delivering contents includes the steps of fetching the stored material contents based on the stored scenario, and delivering the fetched material contents.

This eliminates the need for the prior synthesis and storing of delivery contents and thus allows a reduction in memory capacity even when the contents to be delivered consist of a plurality of material contents which are synthesized.

The educational service providing method using communication lines according to claim 4 is a method of providing an educational service by employing the educational service system using communication lines according to claim 1, comprising the steps of: establishing a service menu combining a face-to-face service for effecting face-to-face learning by the bidirectional communication means with an assigned instructor and an automatic service for effecting learning under contents delivery by the contents delivery means with no assigned instructor; and providing services based on the established service menu.

This allows each single instructor to take charge of a number of services in parallel, with a reduction in personnel cost. It is therefore possible to provide services at lower cost.

The educational service providing method using communication lines according to claim 5 is a method of providing an educational service by employing the educational service system using communication lines according to claim 1, including a membership information file containing personal information on members. The method comprises the steps of: displaying information registered in the membership information file onto an authenticated user terminal; acquiring personal information to be registered or updated from the user terminal; confirming with the user terminal for permission to register the acquired personal information into the membership information file; and recording the confirmed personal information into the membership information file.

Consequently, members can register and update their personal information by using the user terminals.

The educational service providing method using communication lines according to claim 6 is one according to claim 5, wherein the step of confirming for permission to register includes the steps of delivering a confirmation mail to the user, accepting a reply mail to the confirmation mail, and analyzing the accepted reply mail. This can prevent erroneous member registration and achieve enhanced security.

The educational service providing method using communication lines according to claim 7 is a method of providing an educational service by employing the educational service system using communication lines according to claim 1, including a bonus score file for accumulating a score for a member to receive a bonus service with. The method comprises the steps of: adding a predetermined score to the score of the member in the bonus score file when the member satisfies a predetermined bonus score occurring condition; notifying of the bonus score accumulated so far and a free bonus available; and applying for a free bonus based on the notification.

This makes it possible to give members incentives for course promotion, upskilling, etc.

The educational service providing method using communication lines according to claim 8 is a method of providing an educational service by employing the educational service system using communication lines according to claim 1, comprising the steps of: delivering contents for lesson evaluation to the user terminals; acquiring answers to the delivered contents from the user terminals; and calculating lesson evaluations from the acquired answers.

Lesson evaluations can thus be obtained even in automatic services.

The educational service providing method using communication lines according to claim 9 is a method of providing an educational service by employing the educational service system using communication lines according to claim 1, comprising the steps of: delivering contents for a level check test to the user terminals; acquiring answers to the delivered contents from the user terminals; and calculating level check evaluations from the acquired answers.

Level check tests can thus be conducted even in automatic services.

The educational service providing method using communication lines according to claim 10 is a method of providing an educational service by employing the educational service system using communication lines according to claim 1, including a karte file containing lesson histories member by member. The method comprises the steps of: recording lesson description and lesson evaluation into the karte file lesson by lesson; and recording level check evaluations into the karte file upon each level check test.

It is therefore possible to grasp the statuses of lesson attendance, the lesson evaluations, and the progress of level check evaluations of the members, making it possible to enhance member motivation and avoid discouragement due to sluggish improvement.

The educational service providing method using communication lines according to claim 11 is one according to claim 10, including a training point report creation table for defining the relationship between lesson evaluations and descriptions in a personal training point report. The method comprises the steps of: fetching past lesson evaluation data recorded in the karte; and creating a training point report from the fetched lesson evaluation data with reference to the training point report creation table.

Consequently, personal training point reports can be created automatically without a burden on instructors. It is therefore possible to provide the members with detailed instruction, contributing to upskilling of the members.

The educational service providing method using communication lines according to claim 12 is one according to claim 10 or 11, including an educational pattern determination table for determining an educational pattern from evaluation values on evaluation items, and a lesson table for registering a lesson to be attended with respect to each of the evaluation items. The method comprises the steps of: fetching past lesson evaluation data recorded in the karte; extracting an item of low evaluation from the extracted lesson evaluation data; determining an educational pattern from the evaluation value of the extracted item with reference to the educational pattern determination table; and combining lessons based on the determined educational pattern with reference to the lesson table.

Consequently, educational plans can be created automatically without a burden on instructors. It is therefore possible to provide the members with detailed instruction, contributing to upskilling of the members.

The educational service providing method using communication lines according to claim 13 is one according to any one of claims 10 to 12, including an additional instruction target extraction condition table for extracting a member in need of additional instruction. The method comprises the steps of: fetching data from the karte; extracting an additional instruction target from the fetched data of the karte with reference to the additional instruction target extraction condition table; and notifying the extracted member.

This allows periodic automatic extraction of additional instruction targets from the kartes for member notification. It is therefore possible to prevent the members from being discouraged and contribute to upskilling of the members.

The foregoing and other objects, features, and advantages of the invention will become more apparent from the following detailed description of an embodiment of the invention when read in conjunction with the drawings.

### BRIEF DESCRIPTION OF THE DRAWINGS

Fig. 1 is a block diagram showing an educational service center according to an embodiment of the present invention;
Fig. 2 is a conceptual diagram showing a video conference function according to the embodiment of the present invention;
Fig. 3 is a diagram showing the procedure for the video conference function according to the embodiment of the present invention;
Fig. 4 is a conceptual diagram showing a data conference function according to the embodiment of the present invention;
Fig. 5 is a conceptual diagram showing a contents delivery function according to the embodiment of the present invention;
Fig. 6 is a conceptual diagram showing the method of expressing delivery contents in a scenario;
Fig. 7 is a chart showing an example of a scenario for use in the contents delivery of the present invention;
Fig. 8 is a diagram showing the procedure for scenario-based contents delivery;
Fig. 9 is a diagram showing the procedure for operation control on contents under delivery;
Fig. 10 is a conceptual diagram showing a live link function according to the embodiment of the present invention;
Fig. 11 is a conceptual diagram showing a contents management database for automatic scenario creation;
Fig. 12 is a diagram showing a sample of description in a scenario dictionary;
Fig. 13 is a diagram showing the procedure for automatic scenario creation;
Fig. 14 is a diagram showing an example of screen display for situations where the conversation function by the bidirectional communication server is effected;
Fig. 15 is a diagram showing an example of screen display for the case of contents delivery by the contents delivery server;
Fig. 16 is a diagram showing an example of screen display for situations where a conversation is held with contents delivery;
Fig. 17 is a chart showing examples of service configuration patterns for combining face-to-face services and automatic services;
Fig. 18 is a chart showing examples of combination of a plurality of services to be taken charge of by a single instructor;
Fig. 19 is a diagram showing an example of a membership information entry screen;
Fig. 20 is a diagram showing the procedure for the authentication and accounting function according to the embodiment of the present invention;
Fig. 21 is a diagram showing an example of a bonus score inquiry screen;
Fig. 22 is a diagram showing an example of a karte entry screen;
Fig. 23 is a sample of a personal training point report;
Fig. 24 is a chart showing examples of comments included in an advice table;
Fig. 25 is a chart showing examples of comments included in a positive evaluation table;
Fig. 26 is a chart showing examples of comments included in a training point table;
Fig. 27 is a chart showing an example of an evaluation value combination table;
Fig. 28 is a chart showing an example of a comment combination table;
Fig. 29 is a flowchart showing an example of the processing flow of a personal training point report automatic creation function;
Fig. 30 is a chart showing an example of a training point report issuing file;
Fig. 31 is a flowchart showing an example of the processing flow of an educational plan automatic creation function;
Fig. 32 is a flowchart showing an example of an additional instruction target automatic extraction function; and
Fig. 33 is a block diagram showing a conventional educational service system.

### BEST MODE FOR CARRYING OUT THE INVENTION

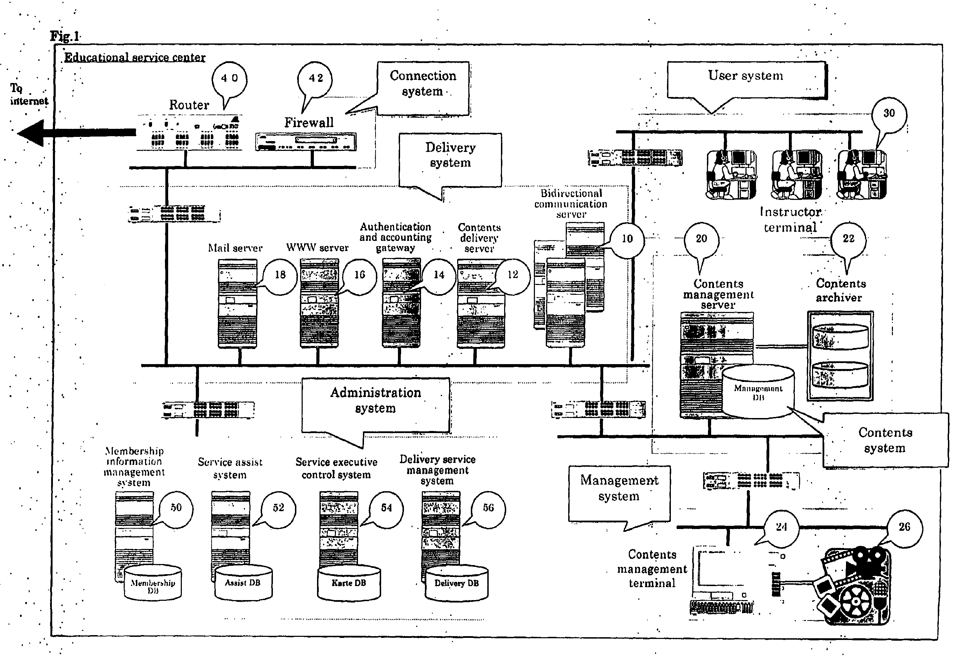

Fig. 1 is a block diagram showing an educational service center according to an embodiment of the educational service system using communication lines according to the present invention. As shown in the diagram, the center is network-connected with the following subsystems.

Delivery system includes a bidirectional communication server 10, a contents delivery server 12, an authentication and accounting gateway 14, a WWW server 16, and a mail server 18. The bidirectional communication server 10 provides bidirectional communication functions among a plurality of user terminals, using multimedia including TV pictures and sounds. The contents delivery server 12 delivers contents to the user terminals. The authentication and accounting gateway 14 exercises authentication and accounting management in cooperation with administration system. The WWW server 16 delivers Web pages for use in authenticating users, selecting service menus, etc. The mail server 18 delivers educational materials, various notifications, materials, and other mails to the users.

Contents system includes a contents management server 20, a contents archiver 22, a contents management terminal 24, and a picture and sound link unit 26. The contents management server 20 registers and stores multimedia contents such as moving images, still images, sounds, text, and sound effects. The contents archiver 22 contains material contents. The contents management terminal 24 is used to make registration and storing operations by the contents administrator. The picture and sound link unit 26 is intended to link live pictures and sounds.

User system includes instructor terminals 30 which are user terminals installed in the center and used chiefly by instructors. Each of the instructor terminals 30 comprises a TV camera and a microphone for capturing the picture and voice of an instructor, and a computer having an interface function intended for the TV camera and microphone and a network connection function. The instructor terminals 30 have the function of transmitting the pictures and voices captured by the TV cameras and microphones, and the function of receiving multimedia information from the bidirectional communication server 10 and the contents delivery server 12 and outputting the same to screens and speakers. The instructor terminals 30 also have the functions of selecting screen configuration and sound allocation on user terminals, and transmitting control signals intended to instruct operations for contents delivery etc. to the bidirectional communication server 10 and the contents delivery server 12.

Connection system includes a router 40 and a firewall 42. The router 40 is intended for Internet connection. The firewall 42 prevents unauthorized entry from exterior for the sake of system protection.

Administration system includes a membership information management system 50, a service assist system 52, a service executive control system 54, and a delivery service management system 56. The membership information management system 50 manages information on the members to be served. The service assist system 52 is intended for smooth educational service provision. The service executive control system 54 performs executive control on educational services. The delivery service management system 56 exercises centralized control on the mail delivery to the registered members.

Now, although not shown in the diagram, student terminals, or user terminals to be used by students, each comprise a TV camera and a microphone for capturing the picture and voice of the student, and a personal computer having an interface function intended for the TV camera and microphone and an Internet connection function. The student terminals can access the WWW server 16 in the center to receive Internet study abroad services provided by the center. It should be noted that the student terminals are basically the same as the foregoing instructor terminals 30 in operation except that they are connected with the center over the Internet.

As employed in the following description, the "user terminals" refer to both the student terminals and the instructor terminals 30.

Now, description will be given of the functions and the procedures to be provided by the educational service center.

### [Bidirectional Communication Functions]

Initially, description will be given of bidirectional communication functions to be provided by the bidirectional communication server 10.

### 1. Video Conference Function

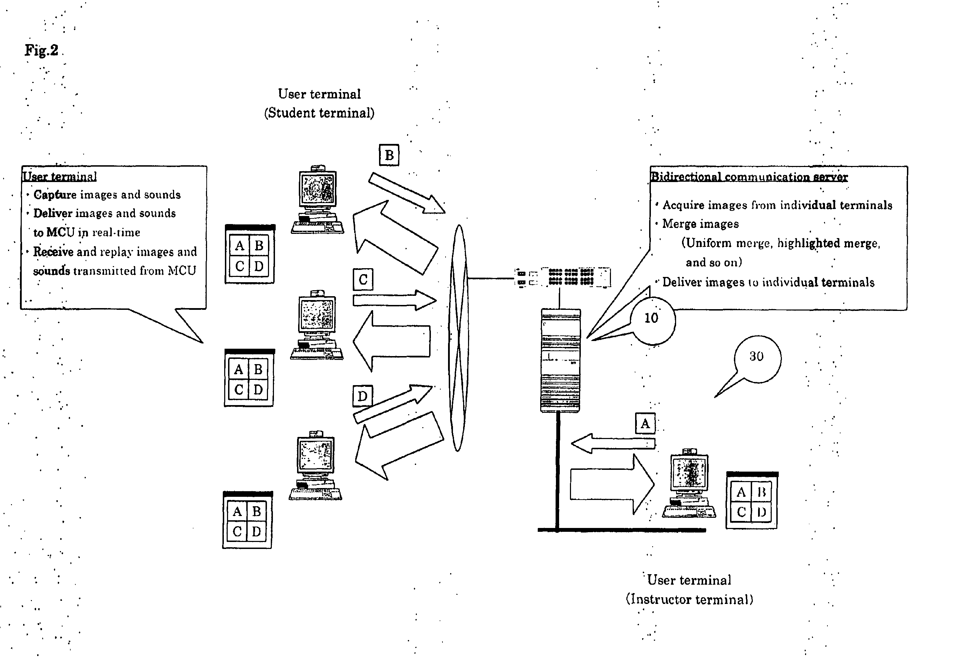

Fig. 2 is a conceptual diagram showing a video conference function to be provided by the bidirectional communication server 10. As shown in the diagram, the video conference function is to provide one-to-one, one-to-many, or many-to-many bidirectional communications using pictures and sounds captured by the TV cameras and microphones that are connected to the respective user terminals.

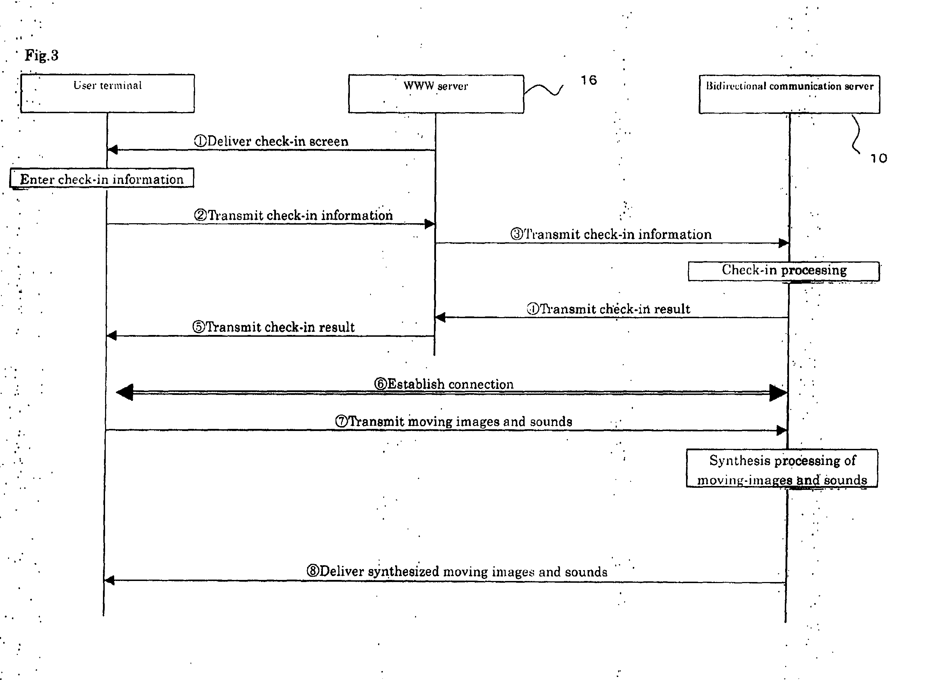

Fig. 3 shows the procedure for the video conference function. User terminals access the WWW server 16 to have a check-in screen delivered. Based on this, the users enter check-in information, and the user terminals transmit the check-in information to the bidirectional communication server 10 via the WWW server 16. Receiving the check-in information, the bidirectional communication server 10 performs check-in processing and returns the check-in results to the respective user terminals via the WWW server 16. This establishes connections. The individual user terminals capture pictures from the TV cameras and sounds from the microphones, and transmit the captured pictures and sounds to the bidirectional communication server 10 in real time. The bidirectional communication server 10 receives the pictures and sounds transmitted from the individual user terminals, synthesizes the received pictures and sounds into pictures and sounds to be delivered to the respective user terminals, and delivers the synthesized pictures and sounds to the user terminals. The individual user terminals receive the pictures and sounds delivered from the bidirectional communication server 10, create dedicated window on-screen to display the received pictures, and output the received sounds to their speakers.

The bidirectional communication server 10 thus provides a conversation function among the user terminals, using pictures and sounds. While the conversation function of the present system is of one-to-one or many-to-many in principle, one-to-many service is also available if settings are made at the time of check-in so as to preclude delivery of pictures and sounds other than those from a certain user terminal (for example, a instructor terminal 30) in particular.

Buttons for specifying the mode of synthesis of pictures and sounds appear on the screen of the instructor terminal 30. The instructor can operate these buttons to transmit the information to the bidirectional communication server 10 so that a uniform merge for synthesizing the pictures and voices of the users uniformly and a highlighted merge for highlighting the pictures and voices of certain users is selected. For example, when a uniform merge is selected in the case of three users or students with a single instructor, the screen is split into four equal sections while the TV pictures of the four are synthesized into a single screen and the sounds of the four are mixed evenly before delivery. When a highlighted merge is selected, the pictures and voices of designated users can be delivered selectively. Alternatively, the pictures and voices of the designated users can be made greater and the pictures and voices of the other users smaller before delivery.

Incidentally, the foregoing embodiment has dealt with the case where both the modes of synthesis of pictures and sounds are designated by a button operation from the instructor terminal at the same time. Nevertheless, buttons for pictures and sounds may be provided separately to allow separate specification. In this case, for example, it is possible to check attendants' expressions in response to the voices of others.

In the foregoing embodiment, the bidirectional communication server 10 synthesizes pictures and sounds before delivery to the user terminals. Nevertheless, the pictures and sounds of user terminals may be delivered to other user terminals individually so that the respective user terminals create separate windows to display the received pictures along with their own pictures and replay sounds separately. In this case, the user terminals need not receive their own pictures and sounds delivered back. This can reduce the load on the communication lines. Besides, the users can arrange the screen configuration and sound allocation freely to their own tastes.

Here, the bidirectional communication server 10 may deliver picture and sound control commands from the instructor terminal 30 to the individual user terminals so that the user terminals set the screen configuration and sound allocation based on the control signals.

In the foregoing embodiment, the instructor terminal 30 alone is provided with the function of controlling the screen configuration and sound allocation on each user terminal. Nevertheless, the attendant terminals may also be given the function of controlling the screen configuration and sound allocation on each user terminal by the same method. Consequently, even in the absence of one who is in charge of the instructor terminal 30, a chairperson can be selected from among the students. The bidirectional communication server 10 may be provided with a flag for granting the chairpersonship to a user terminal, so that control commands from the flagged user terminal are accepted. This makes services available using any one of the user terminals as the instructor terminal.

Furthermore, the screen configuration of the respective user terminals may be controlled based on the magnitudes of sound transmitted from the individual user terminals. More specifically, for example, the magnitudes of the sound transmitted from the respective user terminals can be detected to achieve such screen-configuration control functions that the images of users beyond a certain level are highlighted, and that only the images of users beyond a certain level are displayed selectively. Here, the magnitudes of the sound may be determined in terms of instantaneous values or averages over a certain period of time.

In the case of the method where the bidirectional communication server 10 synthesizes the pictures and sounds of the individual user terminals before delivery to the user terminals, the bidirectional communication server 10 has only to detect the magnitudes of the sound received from the respective user terminals and control the picture synthesis. On the other hand, with the method where the bidirectional communication server 10 delivers the pictures and sounds of the individual user terminals. to the user terminals separately, the destination user terminals may detect the magnitudes of the sound received from the individual user terminals and control screen configuration, or the bidirectional communication server 10 may detect the magnitudes of the sound received from the individual user terminals and deliver screen-configuration control signals to the user terminals so that the respective user terminals control the screen configuration based on the control signals.

Additional functions may also be provided including a voice control function of delaying image display and/or sound output slightly for automatic cue, and an anti-trip function of precluding control functions from being activated by speaker sounds.

The transmission of the pictures and sounds by the respective user terminals and the delivery of the pictures and sounds by the bidirectional communication server 10 may be modified in quality depending on the communication band of the network. To be more specific, there is provided the function of detecting the available communication band and lowering the frame rate of the pictures according to the communication band when the band is limited. Another function may be provided for lowering the sampling rate and the quantization bit rate of the sounds if the available communication band is narrow. The communication band may be detected by such means as packet exchange at the stage of negotiation prior to communication, or by sending packets for checking the communication band during communication. Consequently, even when the communication band of the network is limited, the bidirectional conversation functions having quality corresponding to the communication band can be maintained for optimum services.

### 2. Data Conference Function

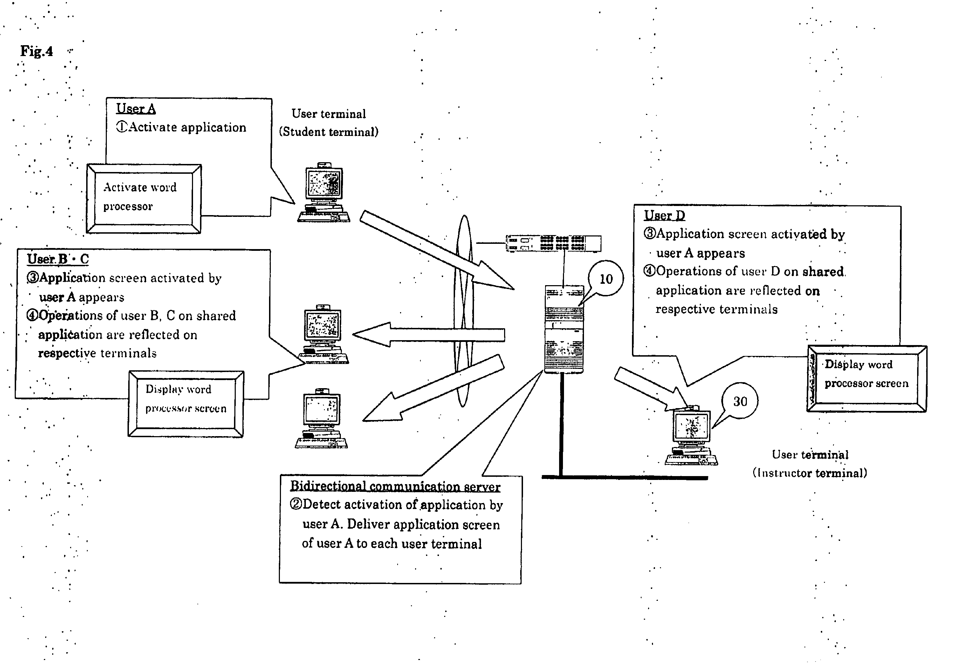

Fig. 4 is a conceptual diagram showing a data conference function to be provided by the bidirectional communication server 10. The data conference function enables application-based cooperative work by sharing applications installed on the individual user terminals or applications on WWW browsers.

For example, as shown in the diagram, when a shared application is activated on the terminal of user A, the terminal of user A transmits the activated shared application screen to the bidirectional communication server 10 successively. The bidirectional communication server 10 delivers the shared application screen from the terminal of user A to the terminals of other users B, C, and D. The terminals of users B, C, and D display the shared application screen delivered from the bidirectional communication server 10. This allows the terminals of users B, C, and D to operate the shared application. Operations are fed back to the terminal of user A via the bidirectional communication server 10. Sophisticated services can thus be provided since all the users can collaborate by using a word processor, spreadsheet, clip art, and other application programs. For example, it is possible to create a whiteboard on which drawings and characters can be written by mouse, and hold a discussion among all the members while writing on this whiteboard.

### 3. Chat Function

Description will now be given of a chat function to be provided by the bidirectional communication server 10. The chat function realizes one-to-one, one-to-many, or many-to-many bidirectional communication by means of text entries from the user terminals. When a chat program is activated on one of the user terminals, the information is posted to the other user terminals via the bidirectional communication server 10, and the chat screen also appears on the other user's display. When text is entered from any of the user terminals, the entered text is posted to the other user terminals via the bidirectional communication server 10, and the entered text is also displayed on the other user terminals. This enables text-based conversations between the users, making precision- and recordability-requiring services available.

Incidentally, the screen-configuration control function of the instructor terminal 30 (or the chairpersonship-flagged user terminal or the like) described above may also include the function for controlling the screens of the data conference function and chat function in the same manner. This allows the instructor or the other to exercise control for smooth multimedia bidirectional communication services allover.

### [Contents Delivery Function]

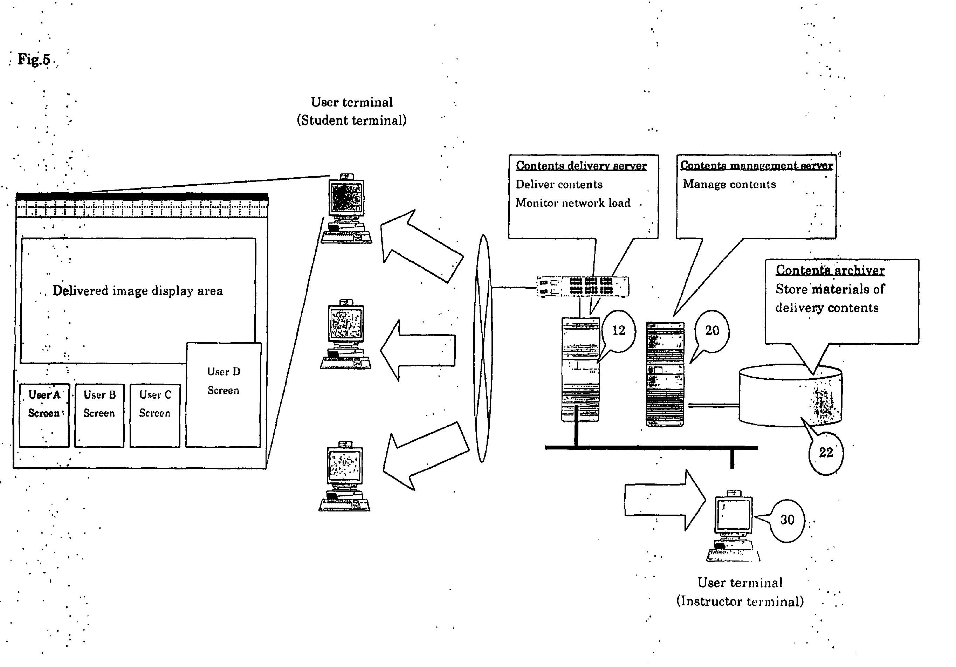

Next, description will be given of the functions and procedure for the contents delivery server 12 to provide. Fig. 5 is a conceptual diagram showing a contents delivery function to be provided by the educational service system. With the contents delivery function, the contents delivery server 12 delivers, to the user terminals, multimedia contents such as moving images, still images, sounds, text, and application data that are recorded on the contents archiver 22 managed by the contents management server 20.

In the educational service system of the present invention, the materials of the contents to be delivered, or material contents, are recorded on the contents archiver 22 and combined into contents for delivery. For this purpose, delivery contents are expressed in a scenario which defines a combination of material contents along the time axis.

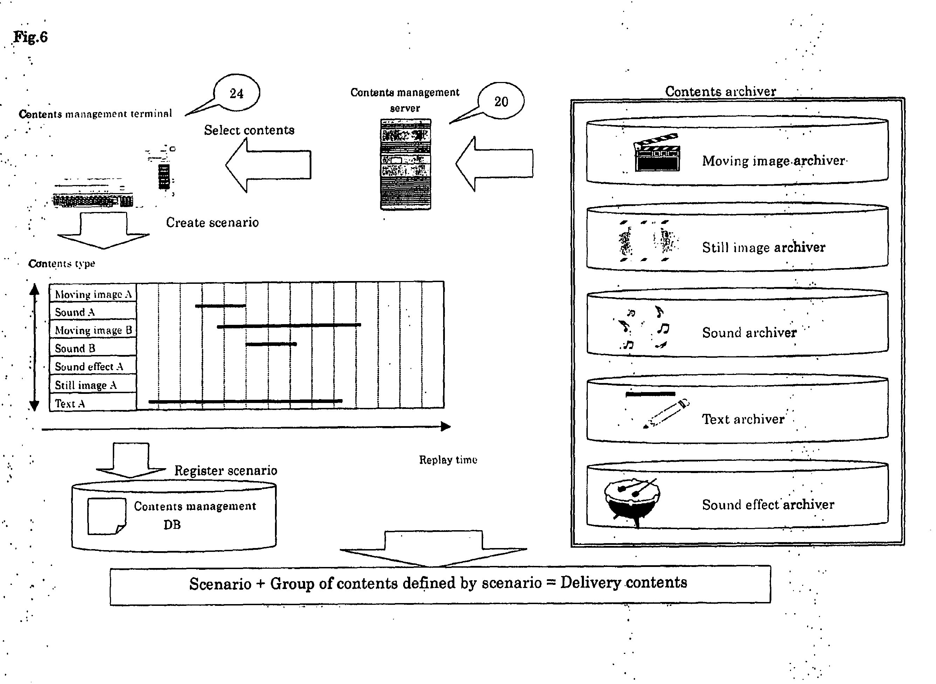

Fig. 6 is a conceptual diagram showing the method of expressing delivery contents in a scenario. More specifically, the delivery contents creator previously registers the material contents necessary for services into the contents archiver 22 via the contents management server 20 by using the contents management terminal 24. At the time of creation of the delivery contents, the material contents to be combined into the delivery contents are selected out of the material contents recorded on the contents archiver 22. As shown in the diagram, by using a chart which indicates the replay times of the material contents, or a replay chart, the material contents to be combined are registered along the time axis to create a scenario. The created scenario is registered into a database of the contents management server 20.

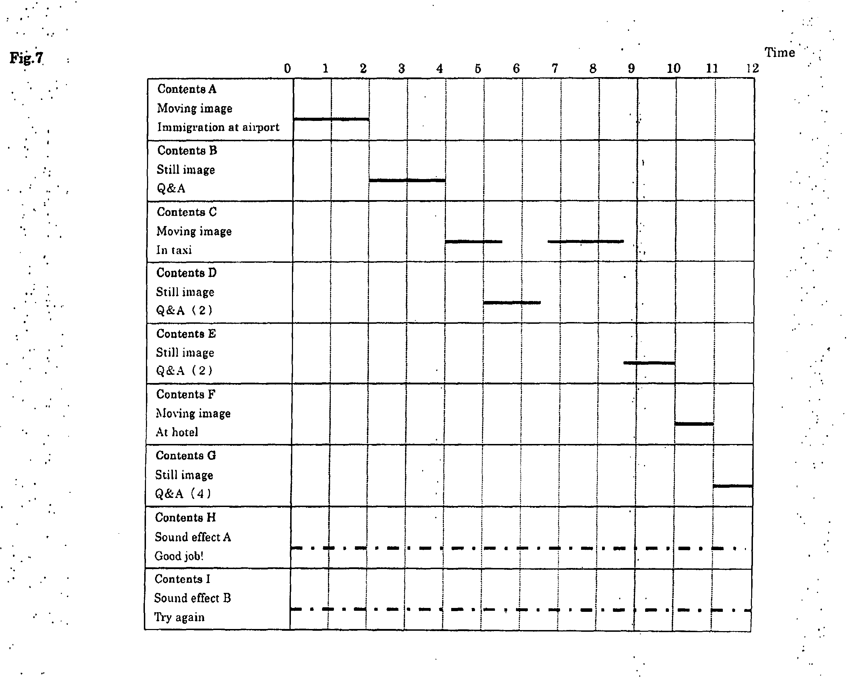

Fig. 7 shows an example of the scenario created. As shown, a combination of moving images, still images, sound effects, and the like is defined along the time axis to constitute a single piece of delivery contents. Here, the dot-line expressions represent ones which can be replayed by operations from a certain terminal anytime within a specific period. Consequently, for example, the instructor can replay sound effects, subtitles, etc. anytime within a specific period for effective presentation.

### [Information Included in Scenario]

A scenario includes the following information in order to achieve delivery of a combination of material contents and allow flexible administration.

### 1. Definition of Delivery Contents

Information as to the entire contents for delivery is defined.

### (1) Delivery contents attribute information

Describes creator, creation date and time, title, genre, and additional information. This allows retrieval of the delivery contents (scenario).

### (2) Used material contents information

Specifies material contents to be used in the delivery contents.

### 2. Definition of Material Contents

Information as to each piece of the material contents to be used in the delivery contents is defined.

### (1) Material contents attribute information

Describes creator, creation date and time, title, genre, and additional information. This allows retrieval of the delivery contents (scenario) based on the attributes of the material contents used.

### (2) Material contents type information

Specifies the type of material contents (moving image/still image/sound/text/application data). Here, the filename extension of the designated material contents may be used for specification.

### (3) Replay time specification information

Specifies the replay start time and replay end time of the material contents in terms of relative time within the delivery contents. This can specify the replay period of the material contents within the delivery contents. A replay time may be used instead of the replay end time.

Here, the replay end time/replay time may be omitted if the material contents have a fixed replay time.

### (4) Replay mode specification information

Specifies the mode of replay of the material contents between automatic replay and manual replay. In the case of manual replay, the contents are replayed under the instruction from the user terminal. For example, this makes it possible to replay sound effects, subtitles, and the like at arbitrary timing for effective presentation.

### (5) Replay application specification information

Specifies which application is used to replay the material contents. The application for replaying the material contents is thus defined by the scenario. Here, the filename extension of the designated material contents may be used for specification.

### (6) Replay screen specification information

Specifies the position and size of the material contents replayed on-screen. The position and size of the material contents under replay on-screen can thus be specified for effective presentation. For sounds, an icon to appear on-screen and the position thereof may be specified.

### (7) Instructor terminal operation specification information

Specifies operations (play/stop/pause/fast forward/rewind, etc.) available for the instructor terminal 30 (or a chairpersonship-flagged user terminal) during the replay of the material contents. The instructor can thus control contents replay in accordance with the progress of the service, allowing various service modes.

### (8) Student terminal operation specification information

Specifies operations (play/stop/pause/fast forward/rewind) available for the student terminal during the replay of the material contents. This allows students to replay the contents according to their own paces.

### (9) Location specification information

Specifies the location where the material contents are stored. This makes it possible to replay the material contents by designating a protocol and server name even if the user terminal does not contain the material contents. Material contents managed in a plurality of centers can also be used for contents delivery. Moreover, the picture and sound link unit 26 can achieve a live link when the contents management server 20 is specified as the location.

### (10) Replay part specification information

Specifies the start time and end time of the part of the material contents to replay. This allows specifications for partial replay of the material contents. A replay time may be used instead of the end time.

### [Method of Scenario-Based Contents Delivery]

Next, description will be given of the method of delivering contents by using the scenario described above.

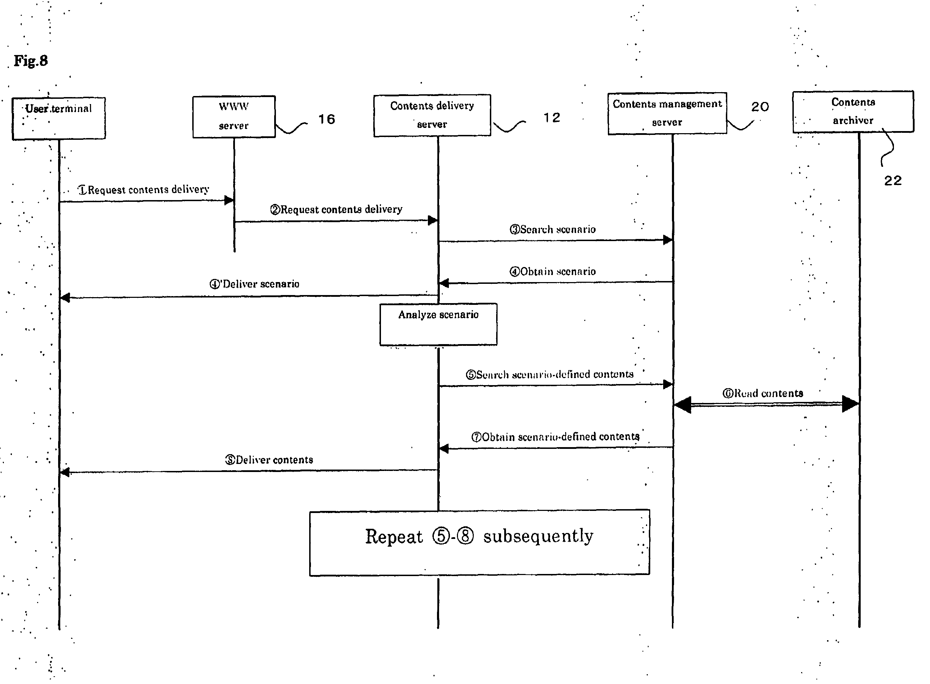

Fig. 8 shows the procedure for scenario-based contents delivery. The contents delivery server 12 receives a contents delivery request from a user terminal via the WWW server 16, and obtains the scenario from the contents management server 20. The contents delivery server 12 also delivers the obtained scenario to the user terminal for the sake of controlling the user terminal. Subsequently, the contents delivery server 12 analyzes the scenario, fetches the material contents defined in the scenario from the contents archiver 22 via the contents management server 20 in succession along the time axis, and delivers the same to the user terminal. These operations are performed on all the material contents defined in the scenario to complete the delivery of the delivery contents.

The destination terminal receives the delivered contents, and replays the same by using designated applications according to the description of the scenario, so that images are displayed in the specified positions on-screen. When a certain operation is specified by the instructor terminal 30 or a student terminal, a predetermined replay control is effected under the command from that terminal.

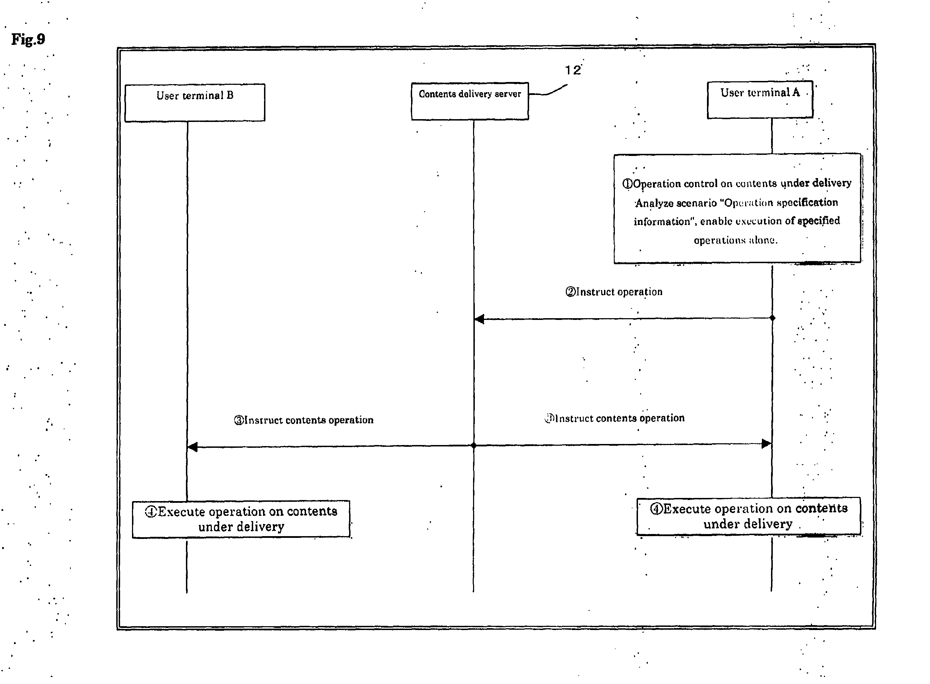

Now, description will be given of the synchronization of replay of material contents between terminals. Fig. 9 shows the procedure for operation control on contents under delivery. As shown in the diagram, when an operation instruction for a possible operation is issued from an operable terminal based on the operation specification information of the scenario, it is posted to the contents delivery server 12. The contents delivery server 12 delivers the operation instruction to each terminal. In order to perform replay based on the operation instruction, all the terminals replay the material contents in synchronization with each other.

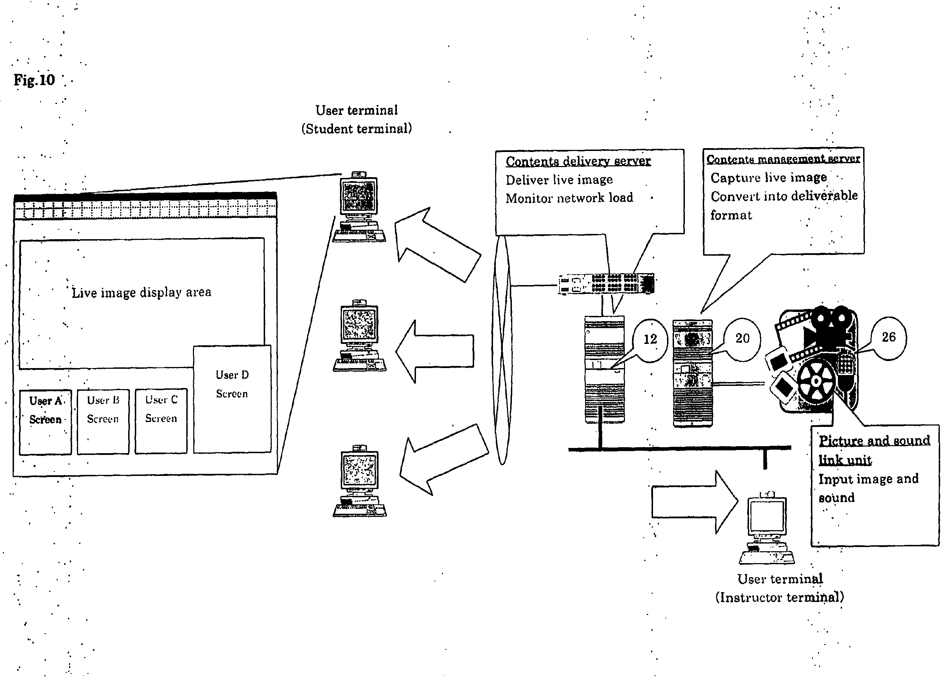

The contents management server 20 is provided with the picture and sound link unit 26, and has the function of capturing picture signals and sounds signals connected thereto and converting the same into deliverable formats. This allows real-time link of live pictures and sounds to the contents to be delivered. Fig. 10 is a conceptual diagram showing the live link function.

When the contents to be delivered are moving images, streaming delivery is performed. Like the bidirectional communication server 10, the contents management server 20 has the function of modifying the frame rate of the moving images according to the communication band of the network. The contents management server 20 may also have the function of modifying the sampling rate or quantization bit rate of sounds according to the communication band of the network if the contents to be delivered are sounds. Consequently, even when the communication band of the network is limited, the contents delivery function can be maintained in quality corresponding to the communication band to provide optimum services.

In the foregoing embodiment, the contents delivery server 12 initially transmits the scenario to the destination terminal(s), and then delivers the material contents at the respective replay times defined in the scenario so that the destination terminal(s) performs replay based on the scenario. Nevertheless, the destination terminal(s) may issue requests based on the scenario that the contents delivery server 12 deliver necessary material contents. In this case, if identical material contents are used repeatedly, the material contents delivered previously can be reused for a reduction in network load.

The contents delivery server 12 may deliver images and sounds that are synthesized according to the scenario, instead of delivering the separate material contents to the destination terminal(s). This facilitates such operations as superimposing subtitles on moving images and still images. This also reduces the load on the destination terminal(s), though with limitation to the operation flexibility in the destination terminal(s). Which method to adopt, delivering separate material contents or synthesized ones, may be selected depending on the network load and the service contents. Both types of contents may be delivered in combination, and replayed in respective separate windows on the destination-terminal side. This makes it possible to provide a contents delivery function of extremely high flexibility with suppressed network load.

The scenario described above may be written in XML or other description languages. This allows the individual terminals to read the scenario with their browsers, so that material contents can be selected along the time axis and replayed automatically by plug-in applications of the browsers.

### [Method of Scenario Creation]

Next, description will be given of the method of creating the scenario described above.

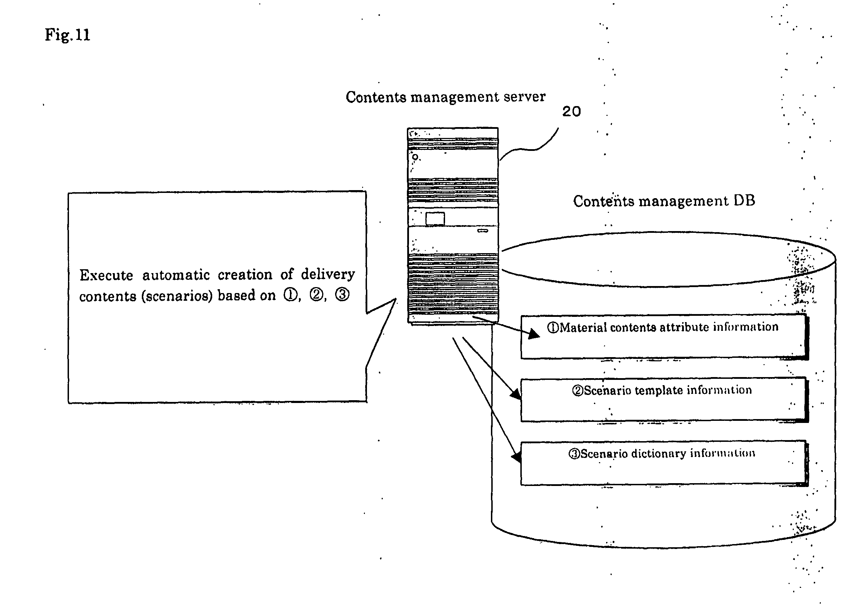

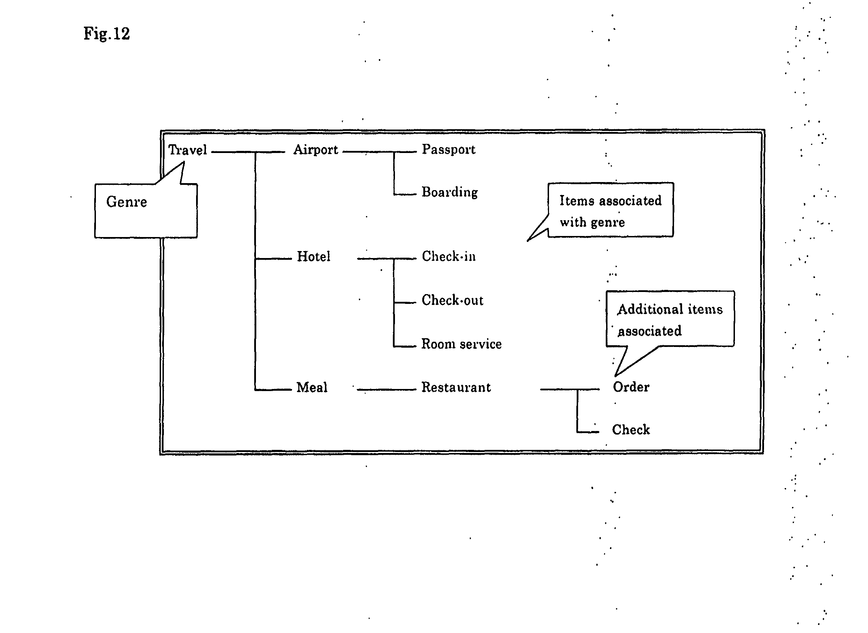

In this educational service center, as shown in Fig. 11, the contents management database of the contents management server 20 contains attribute information, scenario dictionaries, and scenario templates. The attribute information concerns the material contents that are stored in the contents archiver 22. The scenario dictionaries show the relationship of the types of educational materials, or genres, with associated information. The scenario templates describe basic configuration patterns of scenarios. Then, the contents management server 20 has the function of creating scenarios automatically based on these. Fig. 12 shows a sample of description in a scenario dictionary. As shown in the diagram, associated information for a single genre is written in a tree form. Such scenario dictionaries are prepared in advance so as to cover the attribute information of the registered material contents. The scenario templates describe genres, replay time, and the numbers of material contents, as well as the attribute information, type information, replay time information, operation information, and the like of the material contents specifiable. The scenario templates are created and registered for necessary patterns in advance.

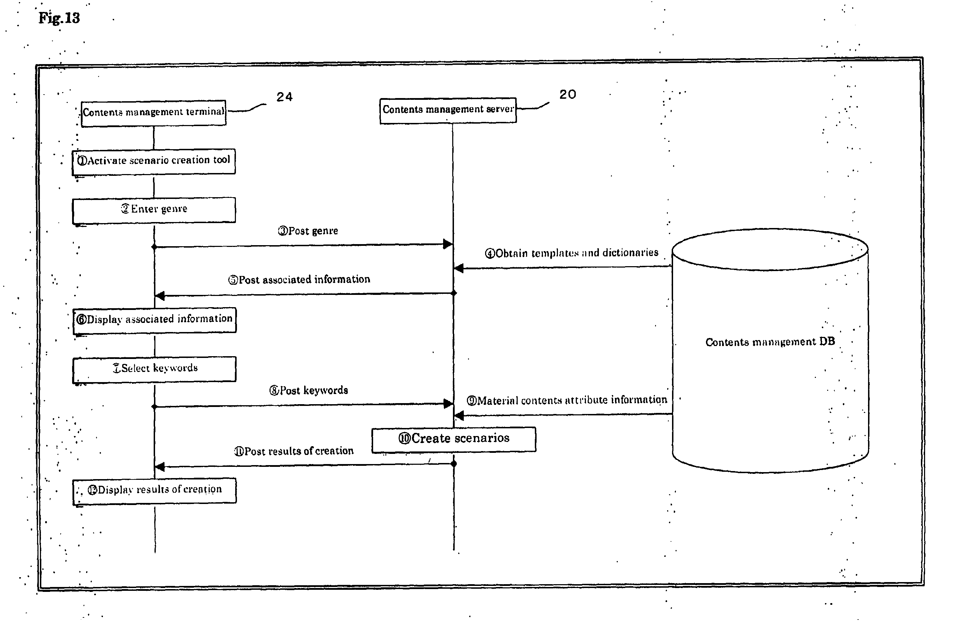

Fig. 13 shows the procedure for creating scenarios automatically by using the contents management database mentioned above. The scenario creator activates a scenario creation tool from the contents management terminal 24. When a genre is entered by the scenario creator, the contents management terminal 24 posts it to the contents management server 20. The contents management server 20 retrieves scenario templates and a scenario dictionary conforming to the posted genre from the contents management database. It also retrieves associated information from the scenario dictionary based on the genre and posts it to the contents management terminal 24. The contents management terminal 24 displays the associated information posted, and posts keywords that are entered by the scenario creator based on the display to the contents management server 20. The contents management server 20 retrieves the material contents that fit with the scenario templates based on the keywords posted, and obtains attribute information thereof. The contents management server 20 creates scenarios by transcribing the obtained attribute information of the material contents into the corresponding positions of the scenario templates, and posts the results of creation to the contents management terminal 24. The contents management terminal 24 displays the results of creation, modifies and edits the same if needed, and registers the completed scenarios into the contents management database of the contents management server 20.

As above, the scenarios are created automatically in this educational service system, and new educational materials incorporating hot topics can be made rapidly for effective provision of educational service.

In the foregoing embodiment, the scenario templates are selected by entering a genre alone. It is also possible, however, to designate the replay time or the ratios of contents types in the replay contents. Moreover, in order to inform the scenario creator of possible genres, replay times, and contents ratios in advance, the information as to the registered scenario templates may be displayed so that selections are made from the same.

In the foregoing embodiment, the scenarios are created automatically by using the scenario dictionaries which describe the relationship between genres and associated information, and scenario templates which describe scenario configuration patterns for creating scenarios. However, the scenarios need not necessarily be created automatically. The scenario creator may enter keywords, retrieve related material contents based on the same, and write the attribute information of the retrieved material contents in the form of scenario data. In this case, necessary material contents can be fetched quickly with an improvement in the efficiency of scenario creation. Incidentally, the attribute information of the material contents may be written into scenario data by such means as a text editor.

The scenario dictionaries may be used alone to retrieve associated information based on the genre entry. Then, the material contents are retrieved based on the associated information, and the attribute information of the retrieved material contents is written into scenario data. Necessary material contents can thus be fetched quicker than in the case of entering keywords, with a further improvement in the efficiency of scenario creation.

In addition, the replay time specification information of the material contents may be set by using a replay chart which shows the replay periods of the respective pieces of material contents. For example, as shown in Fig. 7, a minimum unit time for replaying material contents may be determined in advance so that the replay time specification information is set by selecting frames for replaying the material contents on-screen. This facilitates setting the replay time specification information of the material contents and clarifies the interrelationship among the replay periods of the respective pieces of material contents, allowing effective contents creation.

Scenario templates may be selected based on the genre entry among scenario templates. Here, a list of material contents conforming thereto is displayed, and desired material contents are selected from the list. This automatic retrieval of material contents conforming to scenario templates facilitates combining the material contents. The attribute information of the material contents may be transcribed to the scenario data automatically with a dramatic improvement in the efficiency of scenario creation.

While the foregoing embodiment has dealt with the case where the scenario templates describing basic scenario patterns are created in advance, scenarios registered previously may be used as scenario templates. This makes it possible to create scenarios without preparing scenario templates in advance. This also facilitates creating scenarios of modified contents easily based on the scenarios registered previously.

Now, description will be given of the screen display on a user terminal under educational service using the bidirectional communication functions and the contents delivery function.

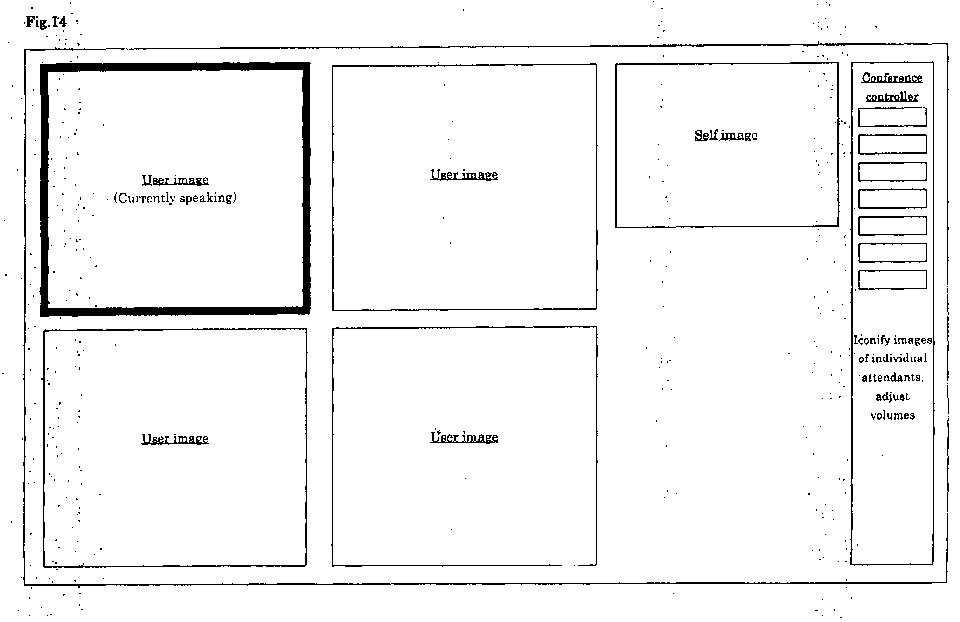

Fig. 14 shows an example of screen display when the conversation function of the bidirectional communication server 10 is used alone. This example of screen display is for situations with five users including the instructor. Windows for displaying the images of the other users and a window for displaying the image of the user himself/herself are created on-screen. Here, the screen has buttons for controlling the video conference function. These buttons are used to exercise the above-described controls on screen configuration, sound allocation, etc. As mentioned previously, the windows of users currently speaking are to be highlighted.

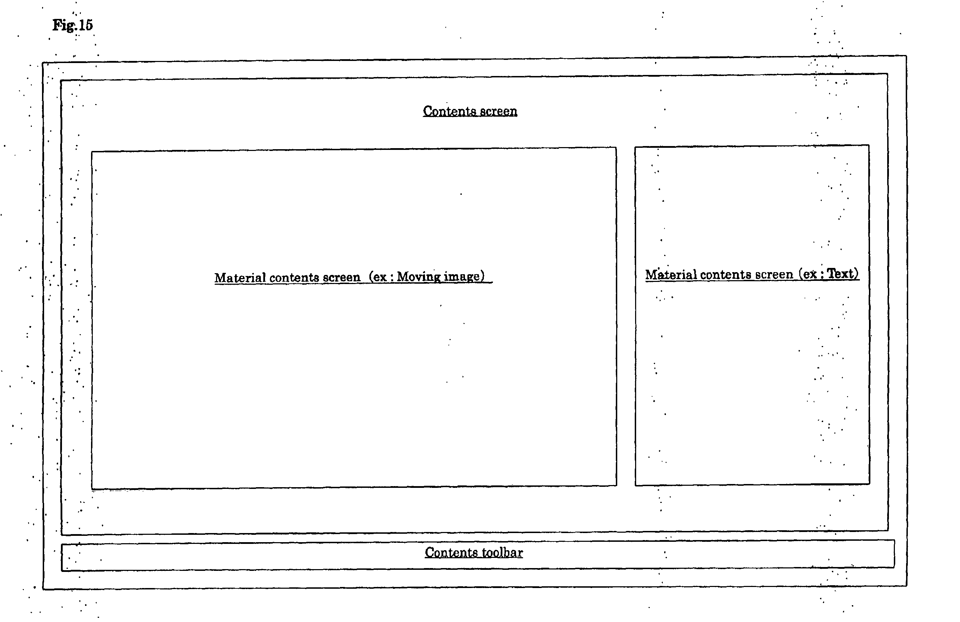

Fig. 15 shows an example of screen display when contents delivery by the contents delivery server 12 is effected alone. Here, a moving-image window and a text window are created and displayed separately. Nevertheless, the windows may be synthesized on the contents-delivery side and transmitted as subtitled display.

There is also provided a contents toolbar, which is displayed active when operable for contents play, stop, pause, fast forward, rewind, etc., for example. These operations can be made based on the operation specification information of the scenario described above.

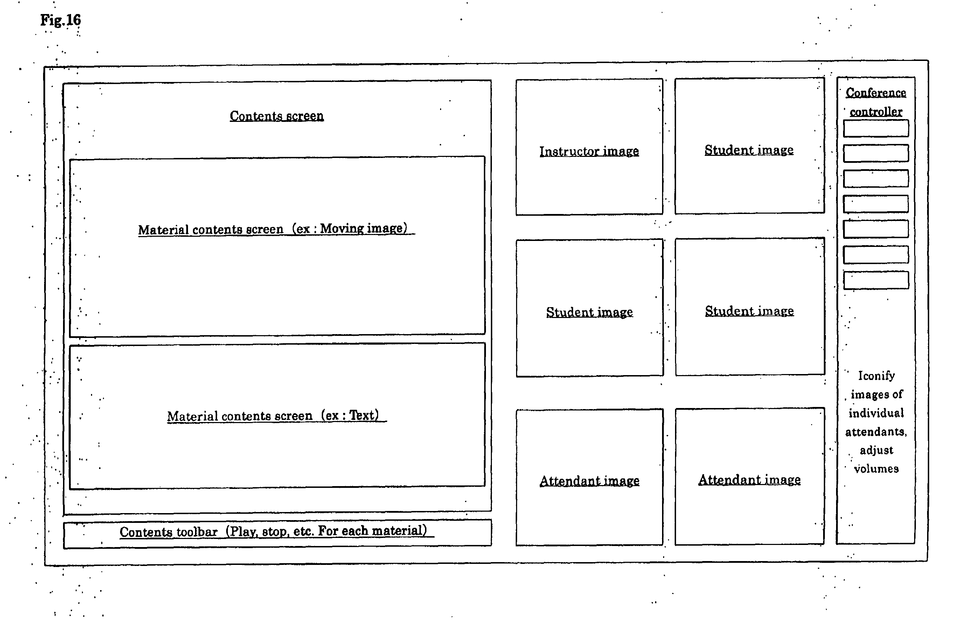

Fig. 16 shows an example of screen display when conversations via the bidirectional communication server 10 are held under contents delivery by the contents delivery server 12. As shown, the attendants can face one another while receiving contents delivery for effective learning. Here, it is also possible to operate the conference control buttons for screen display and the toolbar for contents replay.

### [Mode of Service Provision]

Next, description will be given of the modes of services to be provided by the system of the present embodiment. This educational service system has both the bidirectional communication functions and the contents delivery function, and can thus provide the following two modes of services.

### 1. Face-to-Face Service

In the presence of an instructor, students can hold conversations with the instructor via the bidirectional communication server 10, under contents delivery service by the contents delivery server 12 if necessary, to study.

### 2. Automatic service

In the absence of an instructor, students can receive contents delivery service by the contents delivery server 12 independently to study.

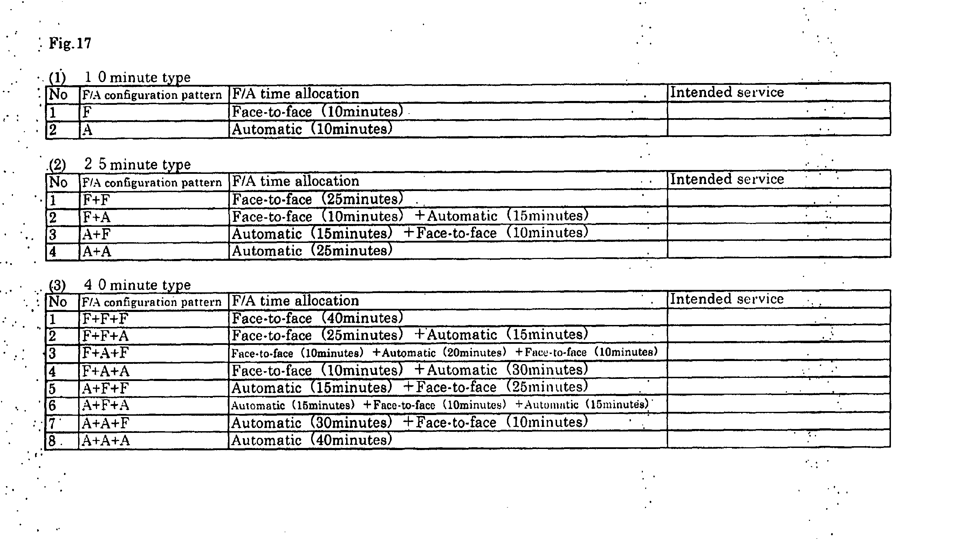

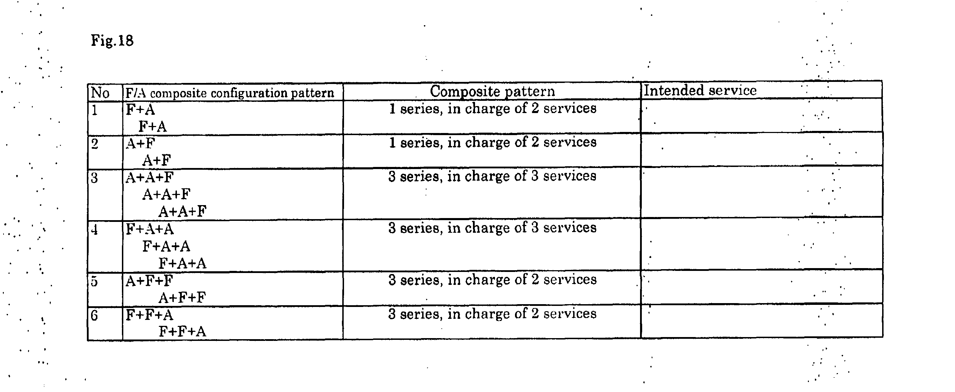

Then, this educational service system is configured to provide services based on service menus which offer face-to-face services and automatic services in combination, with a basic unit of service of 15 minutes and a preparation time of 5 minutes for an instructor or others. Fig. 17 shows examples of service configuration patterns for 10-minute type, 25-minute type, and 40-minute type. In the diagram, F represents a face-to-face service, and A an automatic service. Since service menu files can include combinations of face-to-face and automatic services, an instructor can take charge of a plurality of services as shown in Fig. 18. This allows each single instructor to take charge of a number of services in parallel, with a reduction in personnel cost. It is therefore possible to provide interactive services for small groups by native speakers at lower cost.

The system of the present invention can also provide the following services.

### 3. Group Debate Service

A plurality of students can hold mutual conversations via the bidirectional communication server 10 without an instructor, with contents delivery service by the contents delivery server 12 if necessary, to study.

### 4. Free Talk Service

A freely-accessible conference room is opened full-time, so that students can access this conference to have conversations with the instructor and other students via the bidirectional communication server 10, with contents delivery service by the contents delivery server 12 if necessary, to study.

This allows the members to use knowledge acquired in ordinary lessons for capability improvement and receive a "shower" of foreign language to compensate shortage of communication, promising the same effects as is the case with actual living in foreign countries. The members can thus study with various modes of services in free combination to achieve great educative results easily while staying at home.

### [Function of Administration System]

Now, description will be given of the functions and procedure of the administration system.

The administration system is in charge of service provision. With the aim of improving the efficiency of administration, maintaining service quality, and enhancing the mechanism for accepting members to be served, the administration system is composed of the membership information management system 50, the service assist system 52, the service executive control system 54, and the delivery service management system 56.

### 1. Membership Information Management System

The membership information management system 50 manages information on the members who receive the "Internet study abroad service."

### (1) Member registration function

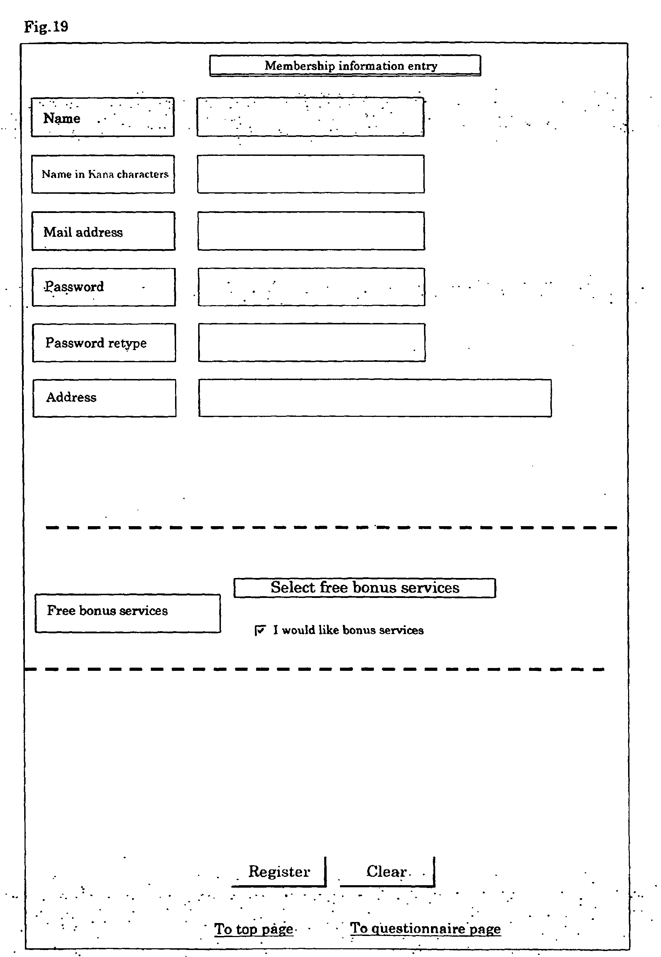

Accepts registration of membership information from "Membership information registration" page on the "Internet study abroad service" Web site. Fig. 19 shows an example of a membership information entry screen. When the membership information management system 50 accepts registration, it issues ID and a password, and sends a confirmation mail describing the issued ID, password, and the entered membership information to the one who entered the information. When the membership information management system 50 receives from the member a reply mail that tells of the absence of errors in the confirmation mail, it actually registers the ID, password, and entered information to its membership information database. In this way, the registration information is confirmed by means of mails to prevent erroneous member registration and enhance security.

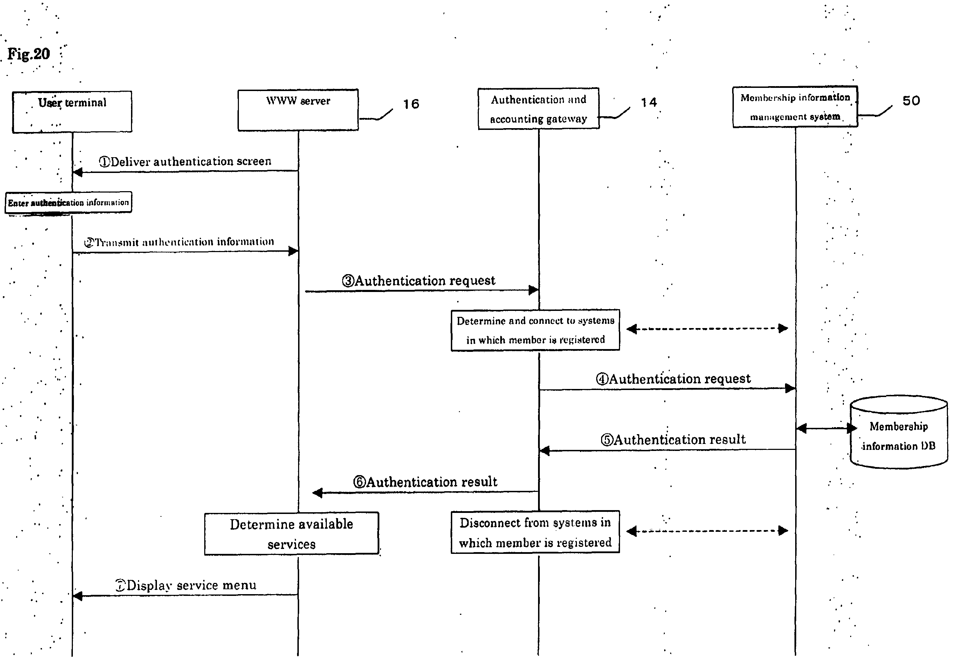

After registration, these ID and password can be used to receive necessary member services on the Web site. Fig. 20 shows the procedure for performing member authentication and accounting by using the ID and password obtained through the member registration. When the member accesses a member service page of " the Internet study abroad service " provided on the WWW server 16 from his/her user terminal, an authentication screen is delivered. Here, the ID and password are entered, and the membership information management system 50 is inquired of that authentication information via the authentication and accounting gateway 14. The membership information management system 50 consults the membership information database and posts the result of authentication to the WWW server 16. From the result of authentication, the WWW server 16 determines which services are available, and delivers the corresponding service menu to the user terminal.

While members are served through the authentication and accounting gateway 14, accounting on the members is performed. This information communication service system has the following three modes of accounting in view of the particularities of the services to be provided.

A first mode is to charge based on the connect times of user terminals. This mode can be effected by measuring the time to elapse from the confirmation of authentication by the authentication and accounting gateway 14 to disconnection at the completion of service. Consequently, charges can be summed up separately even if the connect times vary user by user.

A second mode is to charge based on the connect time of the instructor terminal. This mode can be effected by measuring the time for which user terminals are checked in with the instructor terminal 30 and the bidirectional communication server 10, and posting the time to the authentication and accounting gateway 14 after the completion of service. This realizes charging based on the actual service time of the instructor.

A third mode is to charge based on the contents delivered. This mode can be effected by obtaining the charge information on contents delivered from the contents management server 20 when the contents delivery server 12 delivers the contents to user terminals, and posting the charge information to the authentication and accounting gateway 14 after the completion of service. This realizes charging according to the contents delivered.

As above, this educational service system has the three modes of accounting and can combine these for charging depending on the services. It is therefore possible to set appropriate charges in accordance with the services to be provided.

### (2) Registration information inquiry and modification function

Makes inquires and modifications of the membership information registered. Again, when the membership information is modified, a confirmation mail describing the entered information is sent to the member. Actual registration is conducted after the reception of a reply mail telling of the absence of errors in the confirmation mail.

Incidentally, this function allows the members to change their passwords as needed, thereby providing protection against unauthorized access by others.

### (3) Questionnaire management function

Accepts entries to questionnaires on "Questionnaire" page on the "Internet study abroad service" Web site. The membership information management system 50 receives the entries to the questionnaires, and registers the entered information to its questionnaire database.

### (4) Service point management function

Manages points for member services.
This educational service system performs accounting of deposit type in order to avoid troublesome service-by-service money reception. Service points can be refilled only by the bureau which has a certain ID and password. When the reception of money from a member is confirmed, service points corresponding to the amount of money are added. For withdrawal, service points corresponding to the services to be provided are withdrawn automatically upon receiving notices from the service assist system at the time of service reservations. Incidentally, when services are cancelled, certain points are returned for notices from the service assist system according to predetermined conditions.

The members can check their current services points anytime by using the membership information inquiry function. When the service points fall to or below certain points, the members are informed of it automatically by mails. As a result, the members can grasp their remaining service points anytime to avoid such troubles as unavailable services due to unpayment.

Incidentally, in the foregoing embodiment, the service points are added when the reception of money is confirmed by the bureau. Alternatively, members may request to refill service points on the Web site or by mail so that the amounts of money corresponding to the points may be withdrawn from the members' bank accounts based on the requests. In this case, the points are added upon confirmation of the withdrawal.

### (5) Bonus score management function

Manages scores acquired by members who wish for free bonus services (referred to as "bonus scores"). The membership information management system 50 grants additional bonus scores in any of the following cases:
(i) On purchase of service points
   The additional scores may be proportional to the purchased points, or increased stepwise.
(ii) After a lapse of predetermined dates since member registration
   The additional scores may be proportional to the elapsed dates, or increased stepwise.
(iii) At a predetermined number of times of course participation
   The additional scores may be proportional to the number of times of participation, or increased stepwise.
(iv) For questionnaire answers
(v) In promotion periods

Certain additional scores may be granted for every member. Some scores may be added when predetermined conditions for the "Internet study abroad service" are met within a period. For example, kartes to be described later may be consulted to extract such members as those who consume services intensively, who have taken level check tests by recommendation of instructors, who improve beyond a certain level in evaluations of level check tests, and who are registered newly, so that additional bonus scores are given to these members.

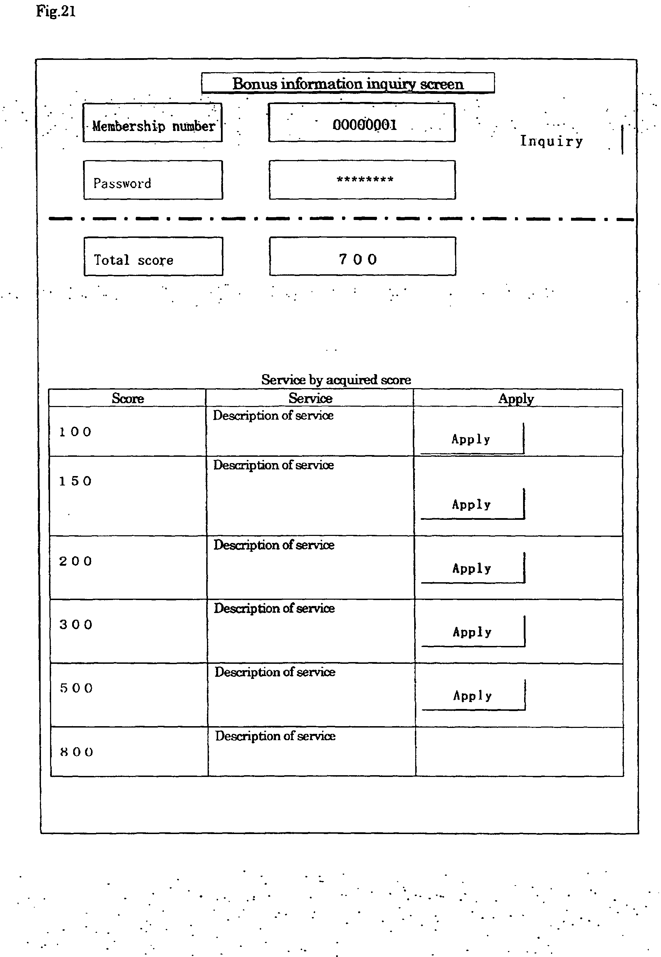

The bonus scores are registered in the membership information database. The details of the registration can be checked anytime on "Bonus information inquiry" page on the "Internet study abroad service" Web site. Fig. 21 shows an example of the bonus information inquiry screen. As shown in the diagram, the total score acquired so far and the descriptions of services available with the score are displayed. Applications for the services can be made online. Free bonuses available to members include free lesson courses, free access to the free-talk service, free tests for level check, free delivery of contents, travel discount tickets, and free gifts.

Mails describing free bonuses available to members may be sent automatically when predetermined bonus scores are reached. The mails may contain the URL for accessing the foregoing Web site. Applications for the free bonuses may be accepted automatically by means of reply mails. In particular, it is highly effective to deliver mails telling of occurrence of bonus points actively and automatically in promotion periods. As above, it is possible to give incentives for enrollment promotion, skill improvement, and the like by providing members with the free bonus scoring system and actively informing them of how many bonus scores are accumulated and that free bonuses are available.

### 2. Service Assist System

The service assist system 52 is intended for efficient service provision of the "Internet study abroad service."

### (1) Course registration function

Accepts registration for courses for members to take, from "Course registration" page on the "Internet study abroad service" Web site. The accepted courses are coded and registered into a course registration database. The courses may be provided by country, by language, and by theme. Available themes include business, travel conversation, qualifications, interpretation, and translation.

### (2) Lesson reservation function

The service assist system 52 has an instructor management file and a resource management file. The instructor management file manages the schedules of the instructors. The resource management file manages a conference schedule set in the bidirectional communication server 10, the use schedules of the instructor terminals 30, a delivery schedule set in the contents delivery server 12, etc. In response to applications for lessons from the members, the service assist system 52 consults these files to check for the availability of the bidirectional communication server 10 for conferences, the availability of the instructor terminals, and the availability of the contents delivery server 12 for contents delivery. Then, the service assist system 52 extracts lessons available to the members based on their certified levels of the level check tests to be described later, and presents the same to the members. Here, lessons within certain zones of levels with respect to the respective certified levels are made available. Consequently, the members can adjust the difficulty levels according to their own states. When the members reply for the lessons, the lessons are registered into lesson reservation transactions. The instructor management file and the resource management file are also updated in association with the lesson settings. In this way, the instructor schedules and the resource availabilities are determined automatically for efficient reservation management.

At the time of lesson reservation, a service optimization condition file is consulted to optimize the lesson settings. The service optimization condition file may include such items or conditions that: a plurality of members taking the same service be grouped by certain ranges of age, gender, and area; different instructors be assigned to a member who receives continuous services on the same day; and members be grouped by level based on the evaluations of the level check tests. These determinations are made by consulting the membership information database, the instructor management file, and the kartes of the members based on the predetermined conditions. Since lesson reservations are made with reference to the service optimization condition file, it is possible to provide optimum lessons for the members.

The applications for lessons may be made in any of dial mode, Web mode, and interactive mode. In dial mode, the members call the bureau and input numbers for application according to voice guidance. In Web mode, applications are made from "lesson reservation" page on the "Internet study abroad service" Web site. In interactive mode, applications are made by using the bidirectional communication server 10.

Incidentally, lesson reservations made previously can also be cancelled by modifying the lesson reservation transactions, the instructor management file, and the resource management file based on the details of reception.

The foregoing embodiment has dealt with the case where lessons are assigned in response to member applications automatically with reference to the instructor management file and the resource management file. However, the present invention is not limited thereto. An annual lesson schedule may be established in advance so that member applications are accepted to this schedule, and lesson reservation transactions are issued based on the results of reception.

### (3) Level check test reservation function

Members in principle can take level check tests upon course registration and by recommendation of instructors.

Level check tests may be conducted in any of face-to-face mode, automatic mode, and mail mode. In face-to-face mode, the bidirectional communication server 10 is used to run tests face-to-face in the presence of instructors. In automatic mode, the members make answers to contents delivered from the contents delivery server 12 by button operations in the absence of instructors. In mail mode, questions are delivered and answers are accepted by e-mail.

For the level check tests in face-to-face mode and automatic mode, the same processing as is the case with lesson reservations is performed for reservation, whereby level check test reservation transactions are issued. In the case of mail mode, question mails containing predetermined questions are delivered automatically.

The foregoing embodiment has dealt with the case where lessons and level check tests require prior reservations. However, the present invention is not limited thereto. Whether lessons and level check tests are available or not may be determined upon applications from members with reference to the instructor management file and the resource management file, so that the services for the lessons and level check tests are set when available. This makes it possible for the members to apply for lessons and take level check tests without reservation.

### (4) Karte management function

Kartes are issued for members who are registered in service courses, whereby the history of lesson attendance and the history of participation of level check tests are recorded.

The karte contains the following information.

### (i) Lesson attendance history

For each lesson, the karte lists the name, date, evaluations, and the like of the attended lesson. The evaluation items include speaking ability, pronunciation, listening comprehension, vocabulary, and grammatical competence in five grades each. No evaluation value will be entered for evaluation items irrelevant to the lesson.

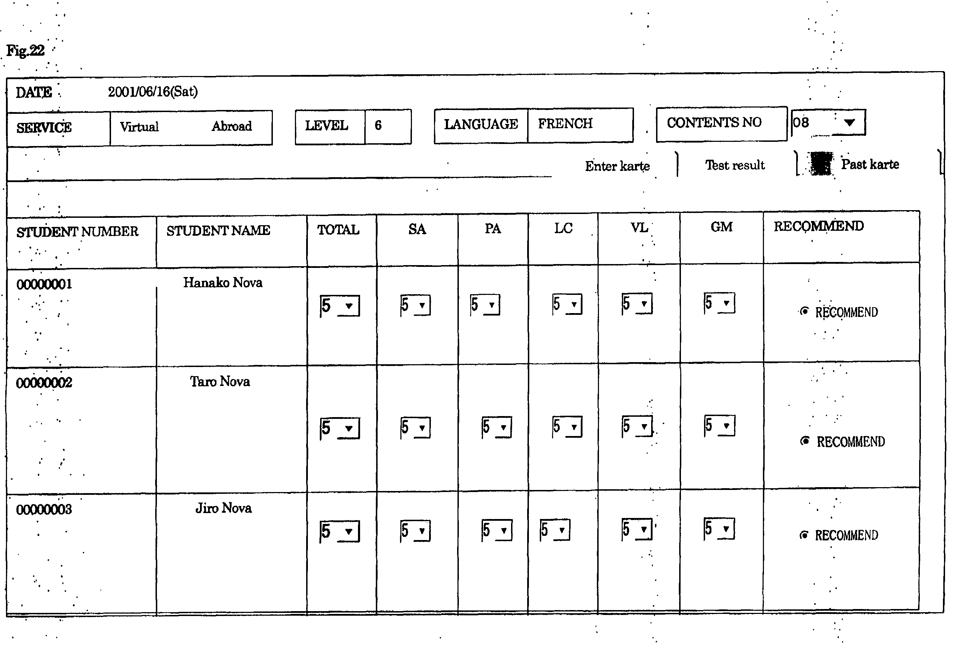

In face-to-face services, the evaluations are entered in principle by the end of the lesson by the instructor in charge. Fig. 22 shows an example of a karte entry screen.

In automatic services, quiz contents are delivered at the end of the lesson, and the students enter answers by button operations. The service assist system 52 has the function of rating the answers with reference to lesson evaluation automatic rating files, which describe the correspondence between answers and evaluations, and inputting the ratings into the karte automatically. Evaluations can thus be made even in automatic services, allowing detailed additional instruction for members.

### (ii) Level check test execution history

For each level check test, the karte lists the name and date of the test executed, the name of the recommending instructor, evaluations, etc. The evaluation items are the same as those of the lesson evaluation described above. In face-to-face tests, evaluations are entered in principle by the instructors who give the tests.

In automatic tests and mail tests, the members make answers by button operations or by e-mail. The service assist system 52 has the function of rating the answers with reference to level check evaluation automatic rating files, which describe the correspondence between answers and evaluations, and inputting the ratings into the karte automatically. This makes it possible to run level check tests without the intervention of instructors, thereby allowing objective services of higher efficiency.

The service assist system 52 also has the function of certifying the levels of the members based on the results of the level check tests. For this certification, a certification condition table is consulted to average the evaluation values of the individual evaluation items with weights and determine certification levels. The certification levels are classified into the following nine: level 1 is equivalent to the level of native speakers; level 2 of foreign language specialist; level 3 sufficient for business use; level 4 for daily life; level 5 capable of some communication; level 6 capable of replies in simple sentences; level 7A capable of minimum communication; level 7B capable of greeting and self introduction; and level 7C an absolute beginner. As above, the service assist system 52 has the function of setting certification levels automatically under definite rules, based on the results of the level check tests. This precludes differences among individual evaluators and thus allows objective decisions. It is also possible to lighten the burden on the instructors for more efficient administration.

Incidentally, the results of the level check tests and the certification levels granted are automatically e-mailed to the members.

### (5) Personal training point report creation function

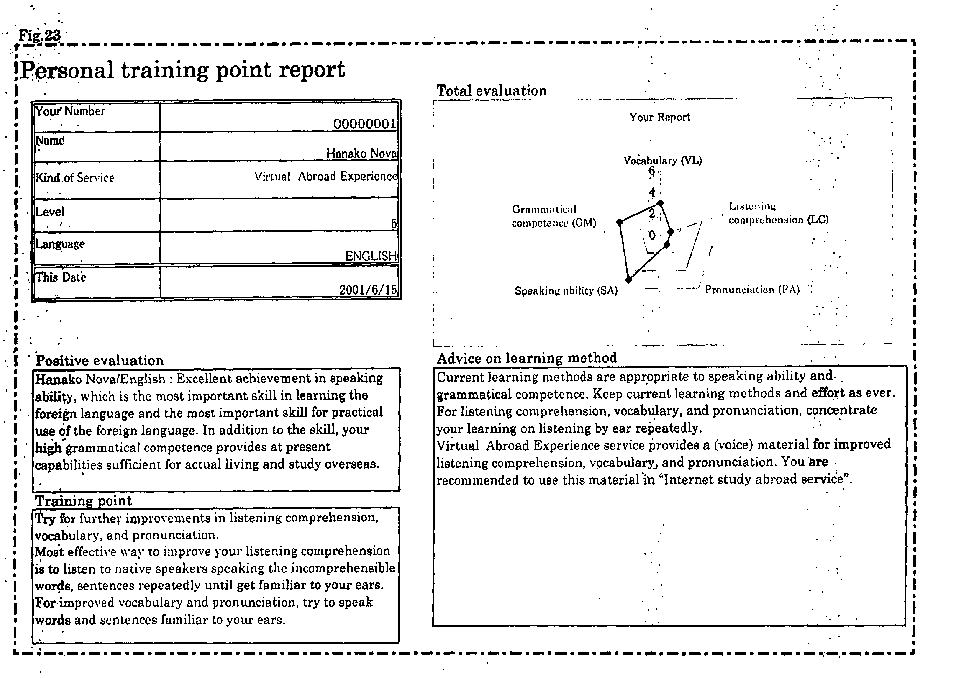

Personal training point reports are ones containing total evaluation, positive evaluation, training points, advise on learning methods, etc. The personal training point reports are delivered by e-mail to members who wish as free bonus services. Fig. 23 shows a sample of the personal training point report. As shown in the diagram, the total evaluation is shown in a radar chart. The advice on learning methods, the positive evaluation, and the training points are given in text form.

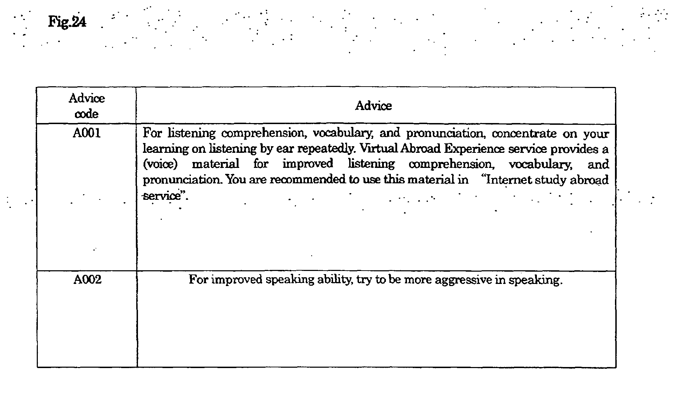

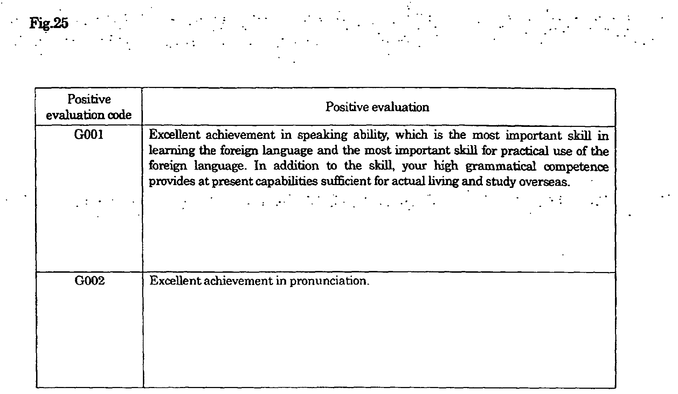

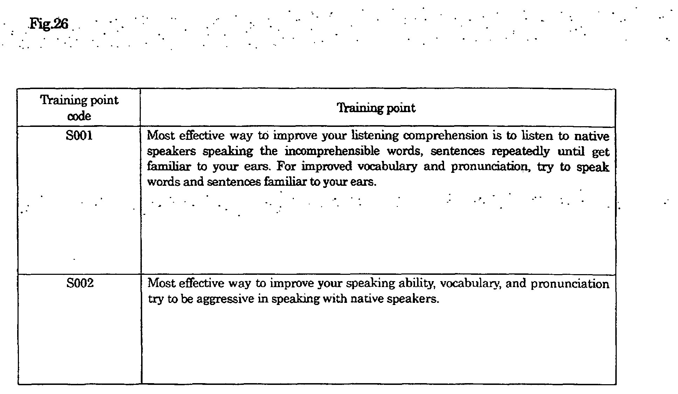

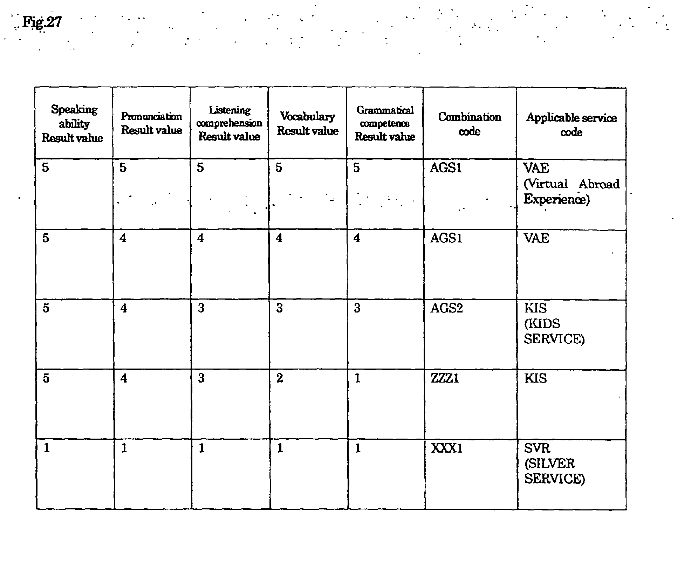

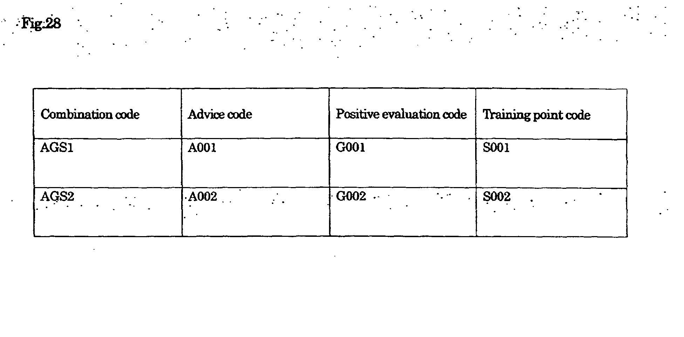

The educational service system has the function of creating an personal training point report automatically from karte data with reference to training point report creation tables. The training point report creation tables provided for this purpose include a learning method advice table, a positive evaluation table, a training point table, an evaluation value combination table, and a comment combination table. The learning method advice table, the positive evaluation table, and the training point table contain comments for the fields of the advice on learning methods, positive evaluation, and training points, respectively. The evaluation value combination table is intended to determine the reference addresses of the three tables from the evaluation value. Fig. 24 shows examples of the comments included in the learning method advice table, Fig. 25 examples of the comments included in the positive evaluation table, Fig. 26 examples of the comments included in the training point table, Fig. 27 an example of the evaluation value combination table, and Fig. 28 an example of the comment combination table.

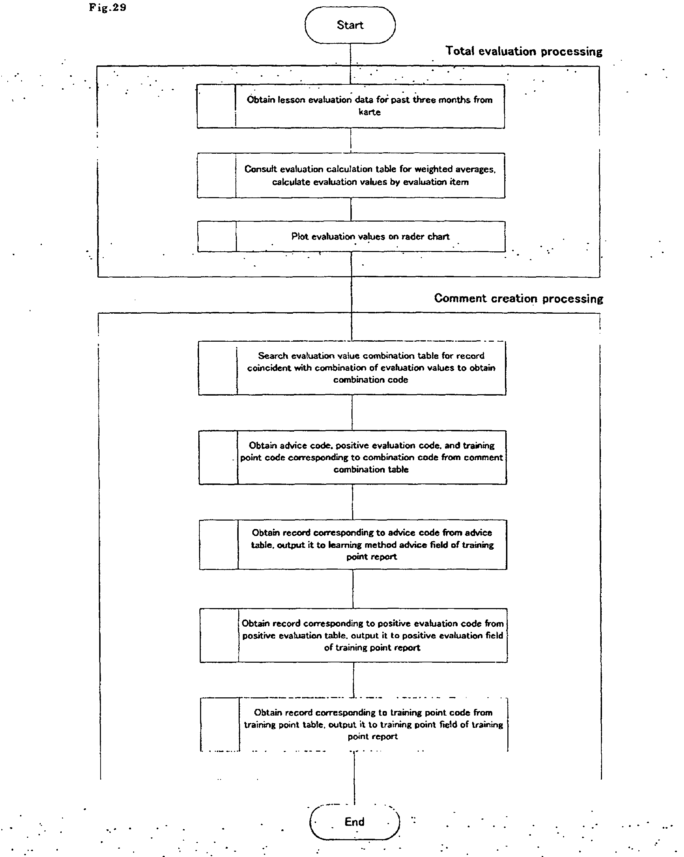

Fig. 29 shows the processing flow of the personal training point report automatic creation function. As shown in the flowchart, total evaluation processing is performed initially. In the total evaluation processing, lesson evaluation data is obtained from the karte for past three months. With reference to an evaluation calculating table which defines weights corresponding to lesson types, the lesson evaluation data is averaged with weights to calculate the evaluation values of the respective evaluation items. The evaluation values calculated are plotted on the radar chart.

Next, the processing of creating comments on the training point report is performed. In the comment creation processing, the evaluation value combination table is searched for a record coinciding with the combination of the evaluation values, whereby a combination code is obtained. Based on the obtained combination code, the comment combination table is consulted to obtain an advice code, a positive evaluation code, and a training point code. The advice table, the positive evaluation table, and the training point table are consulted by the advice code, the positive evaluation code, and the training point code obtained, respectively, whereby records of the corresponding comments are obtained. The obtained records are output to a learning method advice field, a positive evaluation field, and a training point field of the training point report, respectively.

This makes it possible to grasp the members' lesson attendances and progress of lesson evaluations and level check evaluations. It is therefore possible to enhance the members' motivation and avoid their discouragement resulting from sluggish growth.

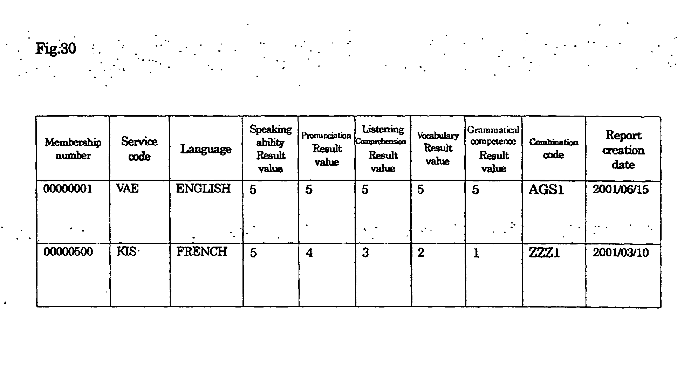

The foregoing embodiment has dealt with the case where personal training point reports themselves are created from past karte information directly. Nevertheless, as shown in Fig. 30, a training point report issuing file may be created to record the calculations of the respective evaluation points and the combination codes for creating corresponding comments. In this case, the personal training point reports are created based on the file at the time of delivery to the members.

### (6) Individual educational plan creation function

The educational service system has the function of creating a recommended educational plan for each individual automatically from past lesson evaluation data recorded in the karte. A training lesson table, a lesson pattern table, and an educational pattern determination table are used for this purpose. The training lesson table defines training lessons for low-rated evaluation items. The lesson pattern table defines combinations of training lessons. The educational pattern determination table is intended to determine an educational pattern for use based on the combination of the respective evaluation values. The evaluation values here are those used in the personal training point reports, obtained from lesson evaluations for past three months.

Hereinafter, description will be given of an example where items of three smallest evaluation values are extracted to present a six-lesson plan. Suppose X, Y, and Z are lessons for training the extracted items of low evaluations, respectively. Then, the education plan to be presented is selected from among the following educational plans: (a) one-item intensive type (XXXXXX); (b) two-item intensive type (XXXYYY); (c) three-item intensive type (XXYYZZ); (d) two-item alternate type (XYXYXY); (e) three-item alternate type (XYZXYZ); (f) modified two-item intensive type 1 (XXXXYY); (g) modified two-item intensive type 2 (XXXXXY); (h) modified three-item intensive type 1 (XXXYYZ); (i) modified three-item intensive type 2 (XXXXYZ); (j) modified three-item alternate type 1 (XYZXYX); (k) modified three-item alternate type 2; and (l) modified three-item alternate type 3.

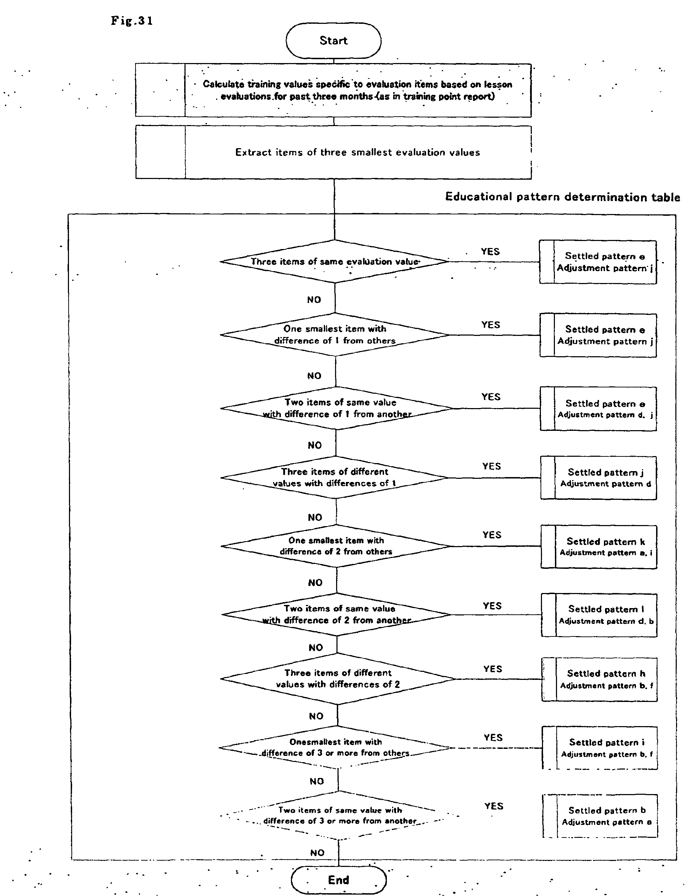

Which educational plan to select depends on the educational pattern determination table which defines the relationship between combinations of evaluation values and educational patterns. Fig. 31 shows the educational pattern determination table in the form of a processing flow. For example, as shown in the chart, when the three items have the same evaluation value, the patterns (e) and (j) are selected as a determined pattern and an adjustment pattern, respectively. Here, the determined pattern is the one to be presented as a recommended lesson plan. The adjustment plan is one to which the determined pattern is switched dynamically in the case of poor outcomes after the start of the lessons.

The determined and adjustment patterns are also selected similarly for the rest of the combinations of evaluation values shown in the chart, respectively.

Based on the educational pattern determined by the educational pattern determination table, corresponding training lessons are extracted from the training lesson table. The combination of the extracted training lessons is presented as the recommended educational plan.

The created educational plan for each individual may be included in the personal training point report or delivered to the member independently.

The educational plan may also be presented at the time of lesson reservation, thereby promoting reservation determinations and automating reservations.

Consequently, appropriate lesson course plans can be created automatically without a burden on instructors. It is therefore possible to provide the members with detailed instruction, contributing to upskilling of the members.

The foregoing embodiment has dealt with the case where the items of three smallest evaluation values are extracted to present a six-lesson plan. However, the present invention is not limited thereto. Educational plans can be similarly created automatically as long as an educational pattern table and educational pattern determination logic corresponding to the number of items and the number of lessons to present are provided.

### (7) Additional instruction target extraction function

The educational service system has the function of extracting members who consume services inactively and who show sluggish improvement in level automatically based on the kartes, and delivering mails to those members.

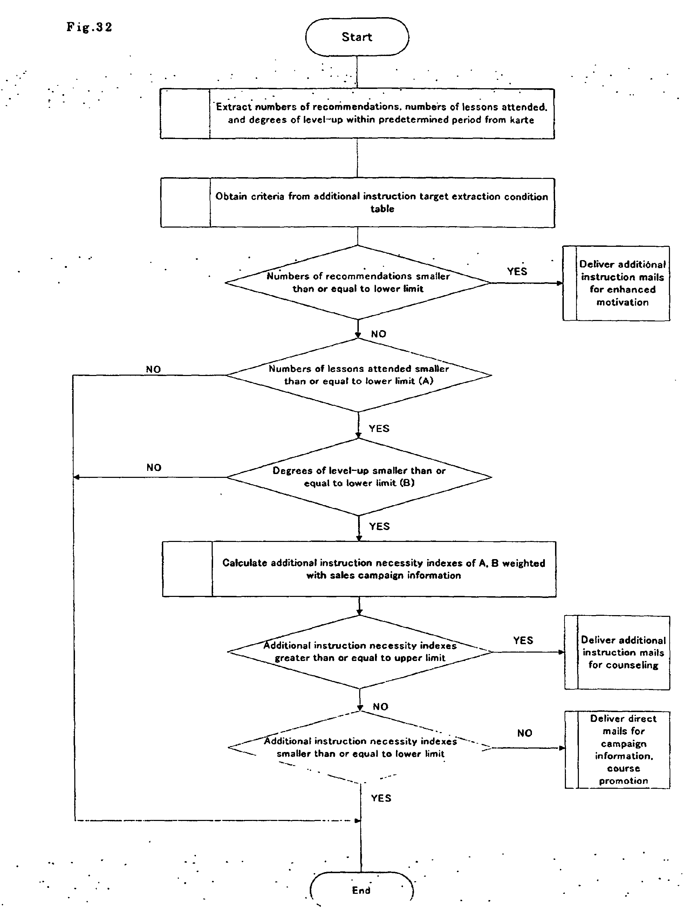

Fig. 32 shows the processing flow of the additional instruction target extraction function. As shown in the chart, the numbers of recommendations, the numbers of lessons attended, and the degrees of level-up within a predetermined period are extracted from the kartes. Then, criteria are obtained from an additional instruction target extraction condition table. If the numbers of recommendations do not exceed a lower limit, additional instruction mails are delivered for enhanced motivation. The numbers of lessons attended and the degrees of level-up are compared with respective lower limits, and if necessary, additional instruction necessity indexes are calculated with weights based on sales campaign information. If the additional instruction necessity indexes reach or exceed an upper limit, additional instruction mails are delivered for counseling promotion. In addition, if the additional instruction necessity indexes are above a lower limit, direct mails are sent for campaign information or course promotion.

In the foregoing embodiment, the numbers of recommendations, the numbers of lessons attended, and the degrees of level-up are used as the conditions for extracting additional instruction targets. However, the present invention is not limited thereto. Any of the items in the kartes may be used for the determination. In this case, determination items, determination conditions, and the details of the processing when the determination conditions are met can be listed in the additional instruction target extraction condition table, so that the processing is effected based on the same.

Consequently, the periodic automatic extraction of additional instruction targets and the notification to the members can prevent the members from being discouraged and give motivation for upskilling. In addition, sales information can be taken into account for determination, and the degree of necessity of additional instruction can be decided to modify the notification. This allows yet detailed instruction for the members.

### 3. Service Executive Control System

The service executive control system 54 is intended to manage the execution of lessons and level check tests set by the service assist system 52.

### (1) Lesson execution management function

With reference to lesson reservation transactions, requests the bidirectional communication server 10 to set a conference room, and posts the addresses of student terminals and instructor terminal to connect a predetermined time before a lesson reservation. The bidirectional communication server 10 thus sets a conference room, and accepts connection requests from the student terminals and instructor terminal notified.

At lesson start time, the service executive control system 54 posts the addresses of the student terminals and instructor terminal as destinations of delivery to the contents delivery server 12, thereby submitting preparation for delivery. Consequently, in the case of interactive services, the contents delivery server 12 informs the instructor terminal that the preparation for delivery is completed, and starts delivery under a delivery start instruction from the instructor terminal. In the case of automatic services, the contents delivery server 12 informs the student terminals that the preparation for delivery is completed, and starts delivery under delivery start instructions from the student terminals.

### (2) Level check test executive management function

Level check tests are conducted by performing the same processing as described above with reference to the level check test transactions.

### 4. Delivery Service Management System

The delivery service management system 56 exercises centralized control on mail delivery for registered members.

The mail delivery covers the confirmation mails concerning the registration and modification of member information, the notification of bonus scores, the results of the level check tests, the training point reports, and the notification of additional instruction targets described so far, as well as educational materials for preparation and review requested by members.

Moreover, direct mails concerning various events, promotion information, and the like are also delivered.

In the foregoing embodiment, the Internet is used as the communication lines. The services are thus available to even remote locations anytime without worry about telephone bills. The foregoing embodiment has dealt with the case where the instructor uses a user terminal in the educational service center. Nevertheless, the present invention is not limited thereto, and the instructor may use a user terminal connected to the Internet. This can be effected by setting a chairpersonship flag for a certain user terminal as described above. Consequently, as long as an Internet-accessible user terminal is available, the instructor can provide services from anywhere anytime. This allows more flexible service provision. Since the instructors in foreign countries can participate, the provision of language education by native speakers can be promoted further.

The foregoing embodiment has dealt with the case where the Internet is used as the communication lines. However, the present invention is not limited thereto. Telephone lines may be used to connect to the educational service center directly.

Alternatively, LAN, WAN, and the like may be used in such applications as corporate education and school education. The present invention also provides the same effects even when used for educational services to be provided in a certain group. Needless to say, the communication lines are not limited to wired ones, but may also be wireless ones.

The present invention is also applicable to situations where the educational service center has booths for service provision. Combinations of interactive services and automatic services can thus be provided to offer services using a variety of multimedia educational materials while allowing instructors to take charge of a plurality of services with a reduction in personnel cost.

The foregoing embodiment has dealt with the case where the user terminals used by the members are personal computers having an interface function for a TV camera and a microphone, and an Internet connection function. Nevertheless, any kind of terminal can be used as long as it is connectable to the communication lines and has the interface function for a TV camera and a microphone. Available terminals include PDAs, game consoles, and other mobile terminals aside from dedicated terminals. Such devices as a cellular phone with a TV camera are also expected to be available in the future, and full use of such devices can widen the range of target users.

### INDUSTRIAL APPLICABILITY

As has been described, the present invention, the educational service system comprises: bidirectional communication means for conducting bidirectional communication using multimedia information including TV pictures and sounds; contents management means for storing multimedia contents to be used as educational materials; and the contents delivery means for delivering the contents stored in the contents management means to user terminals. The multimedia contents stored in advance can be fetched and delivered so that the user terminals hold a conversation while receiving the multimedia contents, with the effect of great educative results.

## Claims

1. An educational service system using communication lines for providing an interactive educational service between a plurality of user terminals connected to the communication lines, the educational service system comprising:
bidirectional communication means for conducting bidirectional communication between the user terminals, using multimedia information including at least TV pictures and sounds;
contents management means for storing multimedia contents to be used as educational materials; and
contents delivery means for delivering the contents stored in the contents management means to the user terminals.

2. An educational service providing method employing the educational service system using communication lines according to claim 1, comprising the steps of:
receiving TV pictures and sounds transmitted from the user terminals;
synthesizing the TV pictures and sounds received;
transmitting the synthesized TV pictures and sounds to the user terminals;
storing multimedia contents to be used as educational materials;
fetching the stored contents; and
delivering the fetched contents to the user terminals.

3. The educational service providing method using communication lines according to claim 2, wherein:
the step of storing contents includes the steps of storing materials of the contents to be delivered, or material contents, and storing a scenario defining a combination of the material contents along a time axis; and
the step of delivering contents includes the steps of fetching the stored material contents based on the stored scenario, and delivering the fetched material contents.

4. An educational service providing method employing the educational service system using communication lines according to claim 1, comprising the steps of:
establishing a service menu combining a face-to-face service for effecting face-to-face learning by the bidirectional communication means with an assigned instructor and an automatic service for effecting learning under contents delivery by the contents delivery means with no assigned instructor; and
providing services based on the established service menu.

5. An educational service providing method employing the educational service system using communication lines according to claim 1,
comprising the steps of:
displaying information registered in a membership information file onto an authenticated user terminal, the membership information file containing personal information on members;
acquiring personal information to be registered or updated from the user terminal;
confirming with the user terminal for permission to register the acquired personal information into the membership information file; and
recording the confirmed personal information into the membership information file.

6. The educational service providing method using communication lines according to claim 5, wherein the step of confirming for permission to register includes the steps of delivering a confirmation mail to the user, accepting a reply mail to the confirmation mail, and analyzing the accepted reply mail.

7. An educational service providing method employing the educational service system using communication lines according to claim 1, comprising the steps of:
adding a predetermined score to a score of a member in a bonus score file when the member satisfies a predetermined bonus score occurring condition, the bonus score file accumulating the score for the member to receive a bonus service with;
notifying of the bonus score accumulated so far and a free bonus available; and
applying for a free bonus based on the notification.

8. An educational service providing method employing the educational service system using communication lines according to claim 1, comprising the steps of:
delivering contents for lesson evaluation to the user terminals;
acquiring answers to the delivered contents from the user terminals; and
calculating lesson evaluations from the acquired answers.

9. An educational service providing method employing the educational service system using communication lines according to claim 1, comprising the steps of:
delivering contents for a level check test to the user terminals;
acquiring answers to the delivered contents from the user terminals; and
calculating level check evaluations from the acquired answers.

10. An educational service providing method employing the educational service system using communication lines according to claim 1, comprising the steps of:
recording lesson description and lesson evaluation into a karte file lesson by lesson, the karte file containing lesson histories member by member; and
recording level check evaluations into the karte file upon each level check test.

11. The educational service providing method using communication lines according to claim 10, wherein:
a training point report creation table for defining the relationship between lesson evaluations and descriptions in a personal training point report is provided; and
the method further comprises the steps of: fetching past lesson evaluation data recorded in the karte; and creating a training point report from the fetched lesson evaluation data with reference to the training point report creation table.

12. The educational service providing method using communication lines according to claim 10 or 11, wherein:
an educational pattern determination table for determining an educational pattern from evaluation values on evaluation items, and a lesson table for registering a lesson to be attended with respect to each of the evaluation items are provided; and
the method further comprises the steps of: fetching past lesson evaluation data recorded in the karte; extracting an item of low evaluation from the extracted lesson evaluation data; determining an educational pattern from the evaluation value of the extracted item with reference to the educational pattern determination table; and combining lessons based on the determined educational pattern with reference to the lesson table.

13. The educational service providing method using communication lines according to any one of claims 10 to 12, wherein:
an additional instruction target extraction condition table for extracting a member in need of additional instruction is provided; and
the method further comprises the steps of: fetching data from the karte; extracting an additional instruction target from the fetched data of the karte with reference to the additional instruction target extraction condition table; and notifying the extracted member.

## Amended claims

### Amended claims under Art. 19.1 PCT

**1.** (Amended) An educational service system comprising:
bidirectional communication means for providing a bidirectional conversation function using TV pictures and sounds between terminals connected to communication lines;
material contents storing means for storing materials of contents to be delivered, or multimedia material contents;
scenario storing means for storing a scenario for defining a combination of the material contents along a time axis; and
contents delivery means for fetching the material contents stored in the material contents storing means based on the scenario stored in the scenario storing means, and delivering the same to each of the terminals, wherein
one or a plurality of instructor terminals and one or a plurality of student terminals hold a conversation using TV pictures and sounds while the individual terminals are given a presentation using a plurality of material contents in combination.

**2.** (Amended) The educational service system according to claim 1, having a function by which the timing of delivery of the material contents by the contents delivery means is controlled from the instructor terminal(s).

**3.** (Amended) The educational service system according to claim 1 or 2, having a function of providing a lesson menu combining:
a face-to-face service for holding a conversation using TV pictures and sounds between the instructor terminal(s) and the student terminal(s) by the bidirectional communication means in the presence of an instructor or instructors while performing contents delivery to the individual terminals by the contents delivery means if necessary; and
an automatic service for performing contents delivery alone to the individual student terminal(s) by the contents delivery means in the absence of an instructor, and wherein
each single instructor takes charge of a plurality of lessons in parallel.

**4.** (Amended) The educational service system according to claim 3, wherein the lesson menu includes a group learning service for holding a conversation using TV pictures and sounds between the student terminals by the bidirectional communication means in the absence of an instructor while performing contents delivery to the individual student terminals by the contents delivery means if necessary.

**5.** (Amended) The educational service system according to claim 3 or 4, wherein:
the bidirectional communication means has a function of providing a conference room accessible freely; and
the lesson menu includes a free-talk service for allowing the students to connect their terminals to the conference room and hold a free conversation with a connected instructor(s) and other students while receiving contents delivery by the contents delivery means if necessary.

**6.** (Amended) The educational service system according to any one of claims 1 to 5, having:
a membership information registration function of registering information on members who receive an educational service provided by the bidirectional communication means and the contents delivery means; and
a function of issuing kartes of at least a history of lesson attendance and a history of lesson evaluation to the registered members.

**7.** (Amended) The educational service system according to claim 6, including bonus scores for accumulating scores for the registered members to receive a bonus service with,
the educational service system having functions of:
consulting the kartes to extract members who exceed a certain condition in a rate of lesson attendance within a predetermined period and/or members who exceed a certain condition in a rate of improvement in lesson evaluation within a predetermined period;
adding a predetermined score to the bonus scores of the extracted members; and
notifying by mail of an available bonus service to members whose bonus scores reach a predetermined score.

**8.** (Amended) The educational service system according to claim 6 or 7, having functions of:
delivering contents for lesson evaluation to the student terminals;
acquiring answers to the delivered contents from the students;
consulting a lesson evaluation condition table by the acquired answers to calculate levels specific to evaluation items; and
registering the calculated levels specific to evaluation items into the kartes.

**9.** (Amended) The educational service system according to any one of claims 6 to 8, having functions of:
delivering contents for a level check test to the student terminals;
acquiring answers to the delivered contents from the students;
consulting a level check condition table by the acquired answers to determine levels specific to evaluation items;
consulting a level certification condition table by the determined levels specific to evaluation items to certify the levels of the students based on weighted averages of the levels specific to evaluation items; and
registering the certified levels into the kartes.

**10.** (Amended) The educational service system according to claim 8 or 9, wherein the evaluation items include at least speaking ability, pronunciation, listening comprehension, vocabulary, and grammatical competence.

**11.** (Amended) The educational service system according to any one of claims 8 to 10, including a comment table containing various commentary sentences, and a combination table for defining the relationship between combinations of the levels specific to evaluation items and commentary sentences for use,
the educational service system having functions of:
fetching the levels specific to evaluation items of each. student from the kartes;
consulting the combination table and the comment table by the fetched levels specific to evaluation items to create a report; and
notifying the student of the created report,
the educational service system being capable of providing the student with a report containing advice on a learning method corresponding to the combination of levels specific to evaluation items, the advice being written in text form.

**12.** (Amended) The educational service system according to any one of claims 8 to 11, including a training lesson table for defining training lessons for items low in the levels specific to evaluation items, a lesson pattern table for defining combinations of the training lessons registered in the training lesson table, and an educational pattern determination table for determining which lesson pattern to use out of those registered in the lesson pattern table based on the combination of levels specific to evaluation items,
the educational service system having functions of:
fetching the levels specific to evaluation items of each student from the kartes;
fetching items of low evaluation out of the fetched levels specific to evaluation items, and consulting the training lesson table to extract corresponding training lessons;
consulting the educational pattern determination table by the fetched levels specific to evaluation items to determine a lesson pattern for use; and
presenting an educational plan combining the extracted training lessons based on the determined lesson pattern,
the educational service system being capable of presenting an educational plan combining training lessons for items low in the levels specific to evaluation items of a student.

**13.** (Amended) The educational service system according to claim 12, wherein
an adjustment pattern to be used when training lessons conducted based on the educational plan presented initially bring unfavorable results is registered in the educational pattern determination table,
the educational service system having functions of:
determining a lesson pattern based on the adjustment pattern registered in the educational pattern determination table; and
presenting an educational plan combining the extracted training lessons based on the determined lesson pattern, and wherein
the educational plan presented initially is modified dynamically when training lessons conducted based on the educational plan bring unfavorable results.

**14.** (Added) The educational service system according to any one of claims 6 to 13, having a function of consulting the kartes to extract members who satisfy conditions set in an additional instruction target extraction table in terms of the number of lessons attended and in lesson evaluations within a predetermined period, and delivering additional instruction mails to the extracted members.

**15.** (Added) The educational service system according to any one of claims 1 to 14, including a lesson reservation file for storing reservation information on lessons to be provided by the bidirectional communication means and the contents delivery means, an instructor management file for storing schedules of the instructors, and a resource management file for storing a use schedule of the bidirectional communication means, use schedules of the instructor terminals, and a delivery schedule of the contents delivery means,
the educational service system having functions of:
accepting a reservation for a lesson from a student;
determining whether the lesson is available or not by consulting the instructor management file and the resource management file in response to the accepted reservation for a lesson;
registering the student on the lesson reservation file if the lesson is determined to be available; and
updating the instructor management file and the resource.
management file based on the registration.

**16.** (Added) The educational service system according to claim 15, including a service optimization file for setting a condition for grouping students who attend lessons, and wherein
the function of determining whether the lesson is available or not includes functions of:
fetching information on students already registered on the lesson reservation file; and
comparing the fetched information on the students with information on the student from whom the reservation for the lesson is accepted, and determining that the lesson is available if a condition set in the service optimization file is satisfied.

**17.** (Added) An educational service providing method comprising the steps of:
providing a bidirectional conversation function using TV pictures and sounds between terminals connected to communication lines;
storing materials of contents to be delivered, or multimedia material contents;
storing a scenario for defining a combination of the material contents along a time axis; and
fetching the stored material contents based on the stored scenario, and delivering the same to each of the terminals, and wherein
one or a plurality of instructor terminals and one or a plurality of student terminals hold a conversation using TV pictures and sounds while the individual terminals are given a presentation using a plurality of material contents in combination.
